# EUROPÄISCHE PATENTANMELDUNG

(11) **EP 4 438 298 A1**
(43) Veröffentlichungstag der Anmeldung: **02.10.2024**
(21) Anmeldenummer: 24161625.9
(22) Anmeldetag: 06.03.2024
(51) Int. Cl.: B33Y 30/00, E04G 21/04, E04G 11/34, B29C 64/209, B29C 64/214, B29C 64/227

(54) **VORRICHTUNG UND VERFAHREN ZUR ADDITIVEN FERTIGUNG EINES BAUTEILS**

(30) Priorität: 28.03.2023 DE 102023107846
(71) Anmelder: PERI SE, 89264 Weißenhorn (DE)
(72) Erfinder: Kamp, Carsten, 89264 Weißenhorn (DE)
(74) Vertreter: Markfort, Iris-Anne Lucie

(57) **Zusammenfassung**

Die Erfindung betrifft eine Vorrichtung (3) zur additiven Fertigung eines Bauteils (2), aufweisend eine Materialausgabeeinheit (4) zur Abscheidung eines Baustoffes und eine Aktuatorbaugruppe (5) die ausgebildet ist, die Materialausgabeeinheit (4) über eine Arbeitsfläche (6) zu bewegen, um den Baustoff schichtenweise in vorgegebenen Druckbahnen (D) abzuscheiden. Die Vorrichtung weist wenigstens einen ersten Führungsschenkel auf, der dazu ausgebildet ist, eine erste Oberfläche der von der Materialausgabeeinheit (4) einen oder mehreren abgeschiedenen Baustoffschichten zu formen, wobei der wenigstens eine erste Führungsschenkel von einem ersten Aktuator (40) angetrieben in wenigstens einem Translationsfreiheitsgrad (x, y, z) relativ zu der Materialausgabeeinheit (4) verlagerbar ist. Erfindungsgemäß ist der wenigstens eine erste Führungsschenkel (30) von einem zweiten Aktuator (50) angetrieben in wenigstens einem Rotationsfreiheitsgrad (dx, dy, dz) relativ zu der Materialausgabeeinheit (4) verschwenkbar.

## Beschreibung

Die Erfindung betrifft eine Vorrichtung zur additiven Fertigung eines Bauteils, aufweisend eine Materialausgabeeinheit zur Abscheidung eines Baustoffes und eine Aktuatorbaugruppe die ausgebildet ist, die Materialausgabeeinheit über eine Arbeitsfläche zu bewegen, um den Baustoff schichtenweise in vorgegebenen Druckbahnen abzuscheiden, gemäß dem Oberbegriff des Anspruchs 1.

Die Erfindung betrifft außerdem ein Verfahren zur additiven Fertigung eines Bauteils.

Vorrichtungen und Verfahren zur additiven Fertigung von dreidimensionalen Objekten sind zur Herstellung von beispielsweise Modellen, Prototypen, Werkzeugen und Endprodukten hinlänglich bekannt. Dabei werden Ausgangsmaterialien bzw. Baustoffe in Form von Flüssigkeiten, Pulver oder Filamenten aus thermoplastischen Kunststoffen von einem an einem Endeffektor einer Aktuatorbaugruppe befestigten Druckkopf abgeschieden, um auf Grundlage von 3D-Daten des zu fertigenden Objekts das Objekt schichtweise aufzubauen. Ein derartiges Verfahren wird unter anderem auch als "generatives Fertigungsverfahren" oder als "3D-Druck" bezeichnet.

Mittlerweile ist es auch bekannt, additive Fertigungsverfahren zur Fertigung von ganzen Bauwerken oder Teilen von Bauwerken (beispielsweise Wänden oder Schalungen) zu verwenden. Die additive Fertigung von Bauteilen oder ganzen Bauwerken vermag die Produktivität im Bauwesen erheblich zu steigern. Durch den so genannten "3D-Betondruck" werden Bauwerke schneller und zu geringeren Kosten herstellbar. Mithilfe eines 3D-Betondruckers lassen sich Betonstrukturen schnell und kostengünstig realisieren, bei gleichzeitig größter Gestaltungsfreiheit.

3D-Betondrucker werden regelmäßig in der so genannten Portalbauweise bereitgestellt. Dabei wird die Materialausgabeeinheit bzw. der Druckkopf an einem Querträger befestigt, der wiederum zwischen zwei parallel angeordneten Horizontalträgern oberhalb einer Arbeitsfläche verläuft. Der Druckkopf ist entlang der Längsachse des Querträgers bewegbar, wobei sich außerdem auch der Querträger entlang der Längsachse der Horizontalträger vor- und zurückzubewegen vermag. Auf diese Weise ist eine horizontale Bewegung parallel zu der Arbeitsfläche in den vorgesehenen Druckbahnen möglich. Um außerdem eine vertikale Bewegung zu realisieren, sind die Horizontalträger vertikal bewegbar mit entsprechenden Vertikalstreben verbunden, die eine vertikale Führungsschiene ausbilden. Durch den genannten Aufbau kann sich der Drucckopf in allen drei Raumrichtungen bewegen und additiv Gebäudestrukturen herstellen.

Um die Materialausgabeeinheit mit dem abzuscheidenden Baustoff zu versorgen, ist eine Zuleitung erforderlich, bei der es sich in der Regel um einen flexiblen Schlauch handelt (nachfolgend auch als "Förderschlauch" bezeichnet).

Bei der herkömmlichen Bauweise ohne sogenannten 3D-Betondrucker werden üblicherweise Schalungssysteme zur Herstellung von Betonbauteilen verwendet. Rahmenschalungselemente werden derart zueinander angeordnet und fixiert, dass sie eine Gussform bilden, in die ein verfestigbarer Baustoff, d. h. ein zunächst flüssiger und sich dann verfestigender Baustoff, zumeist Beton, zur Herstellung eines Bauteils, eingebracht wird. Nach dem Verfestigen des Baustoffs werden die Rahmenschalungselemente im Regelfall entfernt. Dieses bekannte Verfahren ermöglicht es, sehr feine und glatte Oberflächen der Betonbauteile herzustellen, indem beispielsweise die Rahmenschalungselemente eine entsprechende Oberfläche an der Schalhaut aufweisen. Diese herkömmliche Bauweise hat jedoch zugleich den Nachteil, dass der Aufbau des Schalungssystems und der anschließende Abbau aufwändig und teuer sind.

Demgegenüber bietet der sogenannte 3D-Betondruck die Möglichkeit, ohne Auf- und Abbau eines zusätzlichen Schalungssystems, entsprechende Bauteile oder ganze Bauwerke zu formen. Das Baumaterial wird in einzelnen Schichten aufgetragen, wobei anders als bei der herkömmlichen Bauweise die dabei entstehenden seitlichen Oberflächen der Bauteile oder Bauwerke nicht vollständig eben und glatt sind, sondern Unregelmäßigkeiten aufweisen können, die auf die einzelnen aufeinander aufgetragenen Schichten zurückgehen.

Diese Unregelmäßigkeiten, die sich beispielsweise als kleine Täler, Ausnehmungen oder Vertiefungen an den Grenzflächen zweier Schichten zeigen können, sollen nach Möglichkeit verringert werden, um eine Nachbearbeitung der Oberflächen zu vereinfachen oder gänzlich überflüssig zu machen.

Hierzu wird im Stand der Technik vorgeschlagen, zusätzliche Glättspachtel, Kellen, Glättscheiben oder dergleichen einzusetzen, die im Bereich der Materialausgabe angebracht sind und sich mit diesem mitbewegen, um während des Druckens das aufgebachte Material seitlich zu glätten.

So offenbart beispielsweise die Druckschrift RU 2 739 244 C2 eine Vorrichtung mit zwei seitlichen Spachteln, die zusätzlich als Elektroden zum Aufheizen und Aushärten des Polystyrol-Baumaterials fungieren, sowie mit einem oberen Druckspachtel, zum Ausbilden einer verdichteten Polystyrol-Schicht.

Die Druckschrift KR 10 1666181 B1 beschreibt einen unerwünschten Effekt, der sich beim 3D-Betondruck einstellen kann, nämlich dass das noch nicht ausgehärtete Material von nachfolgenden oberen Schichten nach unten zu den unteren Druckschichten fließt. Hierdurch wölben sich die seitlichen Oberflächen der gedruckten Bauteile im unteren bodennahen Bereich konvex nach außen.

Um diesem unerwünschten Effekt zu begegnen schlägt die Druckschrift KR 10 1666181 B1 vor, die an den seitlichen Oberflächen gebildeten Unebenheiten und das seitlich überstehende Material nachfolgender Schichten durch zwei seitlich an der Materialausgabeeinheit angebrachte Messerspachtel in Längsrichtung weg zu schneiden (und die seitlichen Oberflächen dadurch zu glätten), und so ein Abfließen zu den unteren Schichten zu vermeiden. Die beiden Messerspachtel werden während des Druckens von der Materialausgabeeinheit mitgezogen. Je nachdem, in welchem Zustand das Material geschnitten werden soll, kann der Schnitt unmittelbar nach dem Drucken (beispielsweise indem die Messerspachtel auf Höhe der Materialausgabeeinheit an dieser angebracht sind) oder mit Zeitversatz erfolgen (beispielsweise indem die Messerspachtel unterhalb der Materialausgabeeinheit an dieser angebracht sind).

Gemäß einer spezifischen Ausführungsform wird vorgeschlagen, dass die Messerspachtel nicht zum Schneiden, sondern zum Formen einer spezifischen Kontur an den seitlichen Oberflächen ausgebildet sind, beispielsweise indem sie eine gekrümmte Form, eine V-Form oder dergleichen haben, derart dass der Querschnitt des schichtweise ausgebildeten Bauteils in unterschiedliche Formen gebracht werden kann.

Eine weitere Lösung aus dem Stand der Technik ist in der Druckschrift CN 111456438 A beschrieben. Hier ist eine oberflächenmodifzierende seitliche Platte beschrieben, die hinter der Ausgabeöffnung der Materialausgabeeinheit angebracht ist. Dabei weist die seitliche Platte in Richtung einer Druckachse X (Längsachse der linearen Druckbewegung) betrachtet einen ersten zu der X-Achse parallelen Abschnitt auf, der in einen in Richtung der X-Achse betrachtet zweiten zu der Ausgabeöffnung angewinkelten Abschnitt übergeht sowie dann in einen dritten von der Ausgabeöffnung abgewinkelten Abschnitt. Hierdurch entsteht eine geknickte Oberfläche der Platte, wobei der Knick zwischen dem zweiten und dem dritten Abschnitt in Richtung zu der aufgetragenen Materialschicht ragt und die seitliche Oberflächen der aufgetragenen Materialschicht glättet.

Die Druckschriften EP 1 587 995 B1 und EP 2 610 417 A1 offenbaren eine Materialausgabeeinheit mit einer Mehrdüsenanordnung, wobei ein erster und zweiter Glättspachtel seitlich angebracht sind, um die gebildeten Oberflächen des Bauteils zu glätten. Gemäß einer Ausführungsform kann die Höhe der beiden Glättspachtel mittels einer Positionssteuerung verändert werden.

Schließlich ist in der Druckschrift KR 10 2439248 B1 eine Lösung offenbart, bei der die Materialausgabe seitlich von zwei Führungsflächen flankiert ist, die eine von der Materialausgabe abgegebene Zementschicht seitlich in eine vorgegebene Wanddicke formen. Um die Reibung zwischen den Führungsflächen und dem Zement zu verringern, kann in den Führungsflächen eine Wasserdüse mit mehreren Mikroöffnungen zum Aufsprühen von Wasser auf die zu formende und glättende Zementoberfläche vorgesehen sein.

Weiterhin kann gemäß einer Ausführungsform in jeder der Führungsflächen eine Ausnehmung für eine zugeordnete Formrolle vorgesehen sein, die sich zumindest abschnittsweise mit ihrer Mantelfläche durch die Ausnehmung erstreckt und hierüber in Kontakt mit der zur formenden Zementoberfläche gelangt. Die Formrolle weist dabei einen frei drehbaren Teil sowie einen mit einer Formachse drehfestverbundenen Teil auf, wobei die zugeordnete Führungsfläche fest mit dem drehfestverbundenen Teil der Formrolle verbunden ist.

Bei einer gezeigten Ausführungsform lässt sich die Formrolle mittels einer separaten Hubeinheit in vertikaler Richtung verstellen, so dass die Führungsflächen in ihrer Position an die ausgegebene Zementmenge oder die Höhe einer Schicht anpassen lassen.

Bei einer gezeigten Ausführungsform kann die Formrolle an einer zweiteiligen Formachse angebracht sein, wobei die Teile über ein Gelenk relativ zueinander verschwenkt werden können, derart, dass der Anstellwinkel der zugeordneten Führungsfläche an die Struktur oder Form der Schicht angepasst werden kann.

Bei einer gezeigten Ausführungsform kann die Formrolle mittels eines separaten Antriebs in horizontaler Richtung verstellbar sein, derart, dass der Anstellwinkel der zugeordneten Führungsfläche an die Struktur oder Form der Schicht angepasst werden kann.

In Anbetracht des bekannten Stands der Technik besteht eine Aufgabe der vorliegenden Erfindung darin, eine Vorrichtung zur additiven Fertigung eines Bauteils mit einer verbesserten Oberflächenglättung bereitzustellen, insbesondere während des Betriebs der Vorrichtung.

Der vorliegenden Erfindung liegt auch die Aufgabe zugrunde, ein Verfahren zur additiven Fertigung eines Bauteils mit einer verbesserten Oberflächenglättung bereitzustellen.

Die Aufgabe wird für die Vorrichtung mit den in Anspruch 1 aufgeführten Merkmalen gelöst. Bezüglich des Verfahrens wird die Aufgabe durch die Merkmale des Anspruchs 25 gelöst.

Die abhängigen Ansprüche und die nachfolgend beschriebenen Merkmale betreffen vorteilhafte Ausführungsformen und Varianten der Erfindung.

Es ist eine Vorrichtung zur additiven Fertigung eines Bauteils vorgesehen, vorzugsweise eine Vorrichtung zur additiven Fertigung von Bauwerken oder Bauteilen von Bauwerken auf einer Arbeitsfläche bzw. einem Untergrund.

Das zu fertigende Bauteil kann insbesondere Teil eines Bauwerks oder einer Schalung sein. Bei dem Bauteil kann es sich auch um ein vollständiges Bauwerk oder um eine vollständige Schalung handeln. Grundsätzlich können beliebige Bauteile erfindungsgemäß additiv gefertigt werden.

Als Bauwerke können im Rahmen der Erfindung Bauwerke aller Art, insbesondere aber Schutzbauten, wie Gebäude zur Unterbringung und zum Aufenthalt von Menschen oder Tieren, Schutzwälle, Deiche, Schutzräume, Einfriedungen, Wehr- und Befestigungsanlagen, Stadtmauern und Gefängnismauern verstanden werden. Es kann sich bei einem Bauwerk allerdings auch um ein Verkehrsbauwerk handeln, beispielsweise um eine Straße, einen Fußgängerweg, eine Brücke oder einen Tunnel. Auch Ver- und Entsorgungsbauwerke wie Brunnen, Klärwerke, Staudämme, Schornsteine oder temporäre Bauwerke können im Rahmen der Erfindung additiv gefertigt werden.

Bei einem Bauteil eines Bauwerks kann es sich im Rahmen der Erfindung insbesondere um eine funktionelle Komponente eines Bauwerks handeln, insbesondere um einen funktionell oder geometrisch zusammenhängenden Teil des Bauwerks, wie zum Beispiel eine Wand, eine Stütze oder eine Treppe. Auch ein Gebäudeteil aus mehreren Bestandteilen des Bauwerks (zum Beispiel ein Stockwerk bzw. eine Etage eines Gebäudes) kann unter dem Begriff "Bauteil" im Rahmen der Erfindung zusammengefasst sein. Auch bei einer Schalung bzw. einem Schalungsbauteil kann es sich um ein Bauteil im Rahmen der Erfindung handeln, insbesondere wenn das Schalungsbauteil bzw. die Schalung anschließend einen Teil des Bauwerks, beispielsweise den äußeren Teil einer Wandung des Bauwerks, bildet.

Es können durch die vorgeschlagene Vorrichtung auch mehrere Bauteile gefertigt werden, gegebenenfalls auch nicht miteinander zusammenhängende Bauteile.

Erfindungsgemäß weist die Vorrichtung eine Materialausgabeeinheit zur Abscheidung eines Baustoffes auf, sowie eine Aktuatorbaugruppe die ausgebildet ist, die Materialausgabeeinheit über eine Arbeitsfläche zu bewegen, um den Baustoff schichtenweise in vorgegebenen Druckbahnen abzuscheiden.

Bei der Arbeitsfläche kann es sich um einem Untergrund handeln - im Rahmen der Erfindung insbesondere um einen Baugrund und/oder ein Fundament, auf dem das Bauteil bzw. Bauwerk errichtet wird. Bei der erfindungsgemäßen Arbeitsfläche kann es sich allerdings auch um ein Stockwerk eines mehrstöckigen Gebäudes oder um eine mobile, bewegliche Arbeitsfläche handeln. Beispielsweise kann vorgesehen sein, das Bauwerk samt Arbeitsfläche bzw. Untergrund nach der additiven Fertigung bis zu seinem vorgesehenen Aufstellort zu transportieren. Grundsätzlich kann sich jede Fläche, auf der das Bauwerk errichtet werden kann (dauerhaft oder vorübergehend) als Arbeitsfläche im Rahmen der Erfindung eignen.

Es kann vorgesehen sein, dass die Materialausgabeeinheit eine Düse aufweist, um den Baustoff auszubringen.

Die Druckbahn, entlang der die Materialausgabeeinheit den Baustoff abscheidet, kann auf Grundlage von 3D-Daten des Bauteils berechnet werden. Entsprechende Verfahrensschritte sind bekannt. Bei den 3D-Daten des Bauteils kann es sich insbesondere um dreidimensionale CAD-Daten handeln. Das Bauteil kann in den Daten insbesondere durch Punktewolken, Kantenmodelle, Flächenmodelle und/oder Volumenmodelle repräsentiert sein.

Es kann eine Steuereinrichtung vorgesehen sein, die das Verfahren oder einzelne Verfahrensschritte der Vorrichtung steuert und/oder regelt.

Beispielsweise kann die Steuereinrichtung zur Berechnung der Druckbahn anhand der eingegebenen 3D-Daten eingerichtet sein. Die Steuereinrichtung kann beispielsweise eingerichtet sein, um aus den 3D-Daten des Bauteils ein virtuelles Modell des Bauteils im bekannten STL-Format ("Standard Triangulation/Tesselation Language"-Format) oder STEP-Format ("Standard for the Exchange of Product model data"-Format) zu berechnen. Im Rahmen des STL-Formats können die Bauteildaten mit Hilfe von Dreiecksfacetten beschrieben werden. Das Prinzip ist bekannt und wird demnach nicht näher beschrieben.

Eine STL-Schnittstelle ist eine Standardschnittstelle vieler CAD-Systeme. Vorliegend kann die Steuereinrichtung eingerichtet sein, um aus beliebigen 3D-CAD-Daten zunächst STL-Daten für die Weiterverarbeitung zu berechnen. Die Steuereinrichtung kann allerdings auch eingerichtet sein, bereits 3D-Daten im STL-Format aufzunehmen und weiterzuverarbeiten. Grundsätzlich kann auch ein beliebiges anderes Datenformat vorgesehen sein.

Unabhängig davon, ob die STL-Daten von der Steuereinrichtung selbst erzeugt oder nur an diese übertragen wurden, kann die Steuereinrichtung eingerichtet sein, um anhand der STL-Daten (oder anhand sonstiger 3D-Daten) die Bauteildaten in Druckerdaten für einen 3D-Druck (bzw. für die additive Fertigung) umzuwandeln. Hierfür kann unter anderem vorgesehen sein, die 3D-Daten bzw. STL-Daten in einzelne zu druckende Schichten umzuwandeln (sogenanntes "Slicen"), wonach für die einzelnen Schichten die Druckbahnen berechnet werden, um die Bewegungen der Materialausgabeeinheit vorzugeben.

Die Steuereinrichtung kann eingerichtet sein, die Materialausgabeeinheit in Abhängigkeit der Druckbahnen anzusteuern und/oder um die Ausbringung bzw. das Abscheiden des Baustoffs zu regulieren.

Die vorstehend genannte Aktuatorbaugruppe kann eingerichtet sein, die Materialausgabeeinheit relativ zu der Arbeitsfläche zu bewegen, insbesondere oberhalb bzw. über der Arbeitsfläche, vorzugsweise parallel und/oder orthogonal zu der Arbeitsfläche. Die Aktuatorbaugruppe kann außerdem eingerichtet sein, die Materialausgabeeinheit in Bezug auf die Arbeitsfläche vertikal zu bewegen, also die Höhe der Materialausgabeeinheit relativ zu der Arbeitsfläche festzulegen. Die Aktuatorbaugruppe kann schließlich für eine horizontale und/oder vertikale Bewegung der Materialausgabeeinheit sorgen, indem die Materialausgabeeinheit entlang entsprechend ausgerichteter Führungen (insbesondere die nachfolgend noch genannten Horizontalführungen und die Vertikalführung) bewegt wird.

Insofern im Rahmen der Erfindung von einer "vertikalen" oder "horizontalen" Richtung gesprochen wird, so ist die vertikale Richtung bezogen auf das Lot zu dem Untergrund bzw. zu der Arbeitsfläche und die horizontale Richtung hierzu rechtwinklig zu verstehen, vorbehaltlich toleranz- bzw. praxisbedingter Winkelabweichungen, die den Verfahrensablauf nicht störend beeinträchtigen.

Für die Bewegung der Materialausgabeeinheit mittels der Aktuatorbaugruppe kann ein Aktuator oder können mehrere Aktuatoren vorgesehen sein, die beispielsweise von der bereits genannten Steuereinrichtung einzeln oder in Gruppen entsprechend ansteuerbar sind. Auch eine manuelle Ansteuerung, bis hin zu einer rein manuellen Bewegungseinleitung, kann vorgesehen sein - auf Aktuatoren kann in diesem Fall gegebenenfalls sogar verzichtet werden, wobei die Aktuatoren auch ausgebildet sein können, die manuell / mechanisch eingeleitete Bewegung zu unterstützen.

Insbesondere weist die Aktuatorbaugruppe für die Bewegung der Materialausgabeeinheit zumindest eine erste Horizontalführung und eine zweite Horizontalführung auf. Die zweite Horizontalführung weist zumindest einen Endabschnitt auf (insbesondere zumindest ein Ende), über den sie mit der ersten Horizontalführung verbunden ist. Die zweite Horizontalführung ist entlang der ersten Horizontalführung bewegbar.

In einer Weiterbildung kann vorgesehen sein, dass die Materialausgabeeinheit quer zu der ersten Horizontalführung entlang der zweiten Horizontalführung bewegbar ist.

Auf vorteilhafte Weise kann die Materialausgabeeinheit in zumindest zwei Translationsfreiheitsgraden bewegt werden, um den Baustoff auszubringen. Durch die Möglichkeit der Bewegung entlang zweier Translationsfreiheitsgrade kann beispielsweise eine gerade verlaufende Wand eines Bauwerks additiv bzw. schichtweise gefertigt werden.

Die Materialausgabeeinheit kann direkt bzw. unmittelbar entlang der ersten und/oder zweiten Horizontalführung bewegbar sein, beispielsweise in der Art eines Schlittens oder einer Laufkatze, der bzw. die entlang der jeweiligen Horizontalführung verläuft. Die Materialausgabeeinheit kann allerdings auch indirekt bzw. mittelbar entlang der jeweiligen Horizontalführung bewegbar, beispielsweise indem sie unmittelbar entlang einer beliebigen sonstigen Führung bewegt wird, die wiederum an der jeweiligen Horizontalführung unmittelbar oder mittelbar beweglich befestigt ist. So kann beispielsweise die zweite Horizontalführung unmittelbar entlang der ersten Horizontalführung bewegt werden, an der die Materialausgabeeinheit mittelbar oder unmittelbar befestigt ist (z. B. in der Art eines Schlittens bzw. einer Laufkatze), so dass die Bewegung der zweiten Horizontalführung entlang der ersten Horizontalführung gleichsam die Materialausgabeeinheit entlang der ersten Horizontalführung bewegt.

Weiterhin kann die Vorrichtung eine Zuleitungsposition für eine mit der Materialausgabeeinheit verbindbare, flexible Zuleitung für den Baustoff aufweisen. Bei der flexiblen Zuleitung kann es sich beispielsweise um einen Förderschlauch für den Baustoff oder um den Baustoff in faseriger Form (insbesondere als Filament) handeln.

Die Aktuatorbaugruppe zur Bewegung der Materialausgabeeinheit kann eine Vertikalführung aufweisen, entlang der die Materialausgabeeinheit vertikal zu der Arbeitsfläche (direkt oder indirekt, beispielsweise über eine Bewegung der ersten Horizontalführung) bewegbar ist.

Es ist denkbar, dass die Materialausgabeeinheit in zumindest zwei Translationsfreiheitsgraden bewegt wird, um den Baustoff auszubringen. Durch die Möglichkeit der Bewegung entlang zweier Translationsfreiheitsgrade kann beispielsweise eine gerade verlaufende Wand eines Bauwerks additiv bzw. schichtweise gefertigt werden.

Es kann jedoch vorzugsweise vorgesehen sein, dass die Materialausgabeeinheit in allen drei Translationsfreiheitsgraden bewegt werden kann, um den Baustoff auszubringen. Insbesondere eine entlang aller Translationsfreiheitsgrade bewegliche Materialausgabeeinheit ermöglicht eine flexible Fertigung beliebiger dreidimensionaler Bauteile auf der Arbeitsfläche.

Vorzugsweise wird die Materialausgabeeinheit in zumindest vier Freiheitsgraden bewegt, insbesondere in allen drei Translationsfreiheitsgraden und zumindest einem Rotationsfreiheitsgrad. Besonders bevorzugt kann eine Bewegung entlang fünf Freiheitsgraden (vorzugsweise alle drei Translationsfreiheitsgrade und zumindest zwei Rotationsfreiheitsgrade) und ganz besonders bevorzugt entlang aller sechs Freiheitsgrade vorgesehen sein.

Insbesondere wenn die Materialausgabeeinheit in allen Translationsfreiheitsgraden und ergänzend in einem oder mehreren Rotationsfreiheitsgraden beweglich ist, können die einzelnen Druckbahnen mit höchster Flexibilität abgeschieden werden. Auf diese Weise kann die Geometrie des Bauwerks bzw. Bauteils nahezu beliebig vorgegeben werden.

Beispielsweise kann ein Verkippen der Materialausgabeeinheit und/oder eine Drehung der Materialausgabeeinheit während des Abscheidens des Baustoffs vorgesehen sein.

Es kann vorgesehen sein, dass die Materialausgabeeinheit an einem Endeffektor der Aktuatorbaugruppe befestigt ist und von der Aktuatorbaugruppe entlang der Druckbahn bewegt wird. Vorzugsweise ist der Endeffektor dabei als Laufkatze einer als Portalkraneinheit ausgebildeten Aktuatorbaugruppe ausgebildet, und entlang der Vertikalführung vertikal bewegbar (vorzugsweise indirekt durch Bewegung der Horizontalführung(en) entlang der Vertikalführung). Ein derartiges System ist auch unter dem Begriff "Portaldrucker" bekannt.

An dieser Stelle sei erwähnt, dass es sich bei der Aktuatorbaugruppe auch um einen Roboter oder Roboterarm handeln kann, insbesondere um einen Industrie-Roboter. Beispielsweise kann ein Sechs-Achs-Roboter oder ein anderes Bewegungssystem, zum Beispiel ein Hexapod oder ein Fünf-Achs-System oder auch eine Kombination aus mehreren Bewegungseinheiten vorgesehen sein, um die Materialausgabeeinheit horizontal und/oder vertikal zu bewegen. Auch schwenkbare und/oder teleskopisch ausziehbare Bewegungseinheiten und/oder Seilzugsysteme können zur Ausbildung der Aktuatorbaugruppe vorgesehen sein. Auch bei diesen Ausgestaltungen kann eine Führung der Zuleitung auf den Achsen äußerst vorteilhaft sein.

Auf die konkrete Ausgestaltung der Vorrichtung kommt es im Rahmen der Erfindung nicht unbedingt an.

Auf vorteilhafte Weise können die erfindungsgemäßen Merkmale in einer bestehenden Vorrichtung nachgerüstet werden. So kann beispielsweise ein bestehender 3D-Betondrucker weiterverwendet und mit zumindest einem nachfolgend beschriebenen Führungsschenkel und einer entsprechenden Aktuatorik nachgerüstet werden, um die Oberflächengüte wenigstens einer ersten Oberfläche des Bauteils bedarfsweise zu optimieren.

Erfindungsgemäß kann wenigstens ein erster Führungsschenkel vorgesehen sein, der dazu ausgebildet ist, eine erste Oberfläche einer oder mehrerer von der Materialausgabeeinheit abgeschiedener Baustoffschichten zu formen. Dabei kann der wenigstens eine Führungsschenkel insbesondere auch dazu dienen, den Baustoff während des Ausbringens seitlich zu stabilisieren und/oder in Form zu bringen. Weiterhin umfasst der Begriff des "Formens" vorliegend auch insbesondere das Glätten, Glattziehen oder anderweitige Beseitigen von unerwünschten Oberflächenstrukturen auf der gebildeten seitlichen Oberfläche des Bauteils.

Nachfolgend wird die Erfindung mit einem ersten und optional einem zweiten Führungsschenkel beschrieben, die jeweils seitlich die abgeschiedene eine oder mehreren Baustoffschichten formen können. Selbstverständlich können jedoch auch mehrere erste Führungsschenkel vorgesehen sein, die zum Formen einer ersten Oberfläche zusammenwirken. Auch können neben dem wenigstens einen ersten Führungsschenkel und einem optionalen wenigstens einen zweiten Führungsschenkel weitere Führungsschenkel oder Strukturen vorgesehen sein, die mittels einer Aktuatorik relativ zu der Materialausgabeeinheit bewegbar oder starr an der Materialausgabeeinheit zum Formen einer Oberfläche der einen oder mehreren Baustoffschichten angebracht sein können.

Der Baustoff wird schichtweise abgeschieden, wobei die additiv aufeinander aufgebrachten Schichten sich miteinander verbinden und ein Bauteil mit seitlichen Oberflächen ausbilden. Wie bereits eingangs ausgeführt, können insbesondere die seitlichen Oberflächen des resultierenden Bauteils Unebenheiten aufweisen. Der erste Führungsschenkel dient dementsprechend dazu, derartige Unebenheiten zu verringern, indem er eine erste Oberfläche formt, insbesondere in der Art eines Spachtels die erste Oberfläche glättet oder in der Art eines Messers unerwünschte Vorsprünge auf der ersten Oberfläche entfernt.

Die erste Oberfläche kann dabei insbesondere eine sich im Wesentlichen vertikal erstreckende Oberfläche einer oder mehrerer in vertikaler Richtung aufeinander aufgebrachter abgeschiedener Baustoffschichten sein. Je nach Dimensionierung und Positionierung des wenigstens einen ersten Führungsschenkels kann dieser sich entlang der Höhe einer einzigen Baustoffschicht oder mehrerer Baustoffschichten erstrecken und dementsprechend eine erste Oberfläche einer abgeschiedenen Baustoffschicht oder eine erste Oberfläche mehrerer abgeschiedener Baustoffschichten formen.

Werden die Schichten in vertikaler Richtung unmittelbar aufeinander aufgebracht, bildet sich ein Bauteil (oder Bauwerk) mit seitlichen Oberflächen (im Falle einer Wand beispielsweise die Wandflächen), die sich im Wesentlichen in vertikaler Richtung, d.h. als Lot zur Arbeitsfläche, erstrecken. Jedoch können mit der erfindungsgemäßen Vorrichtung die einzelnen Schichten beispielsweise auch mit einem leichten Versatz zueinander aufeinander aufgebracht werden, derart, dass beispielsweise eine in vertikaler Richtung betrachtet im wesentlichen gekrümmte Oberfläche entsteht, beispielweise ein Überhang.

Auch eine solche in vertikaler Richtung betrachtet gekrümmte Oberfläche kann erfindungsgemäß mit einem ersten Führungsschenkel geformt werden, wie nachfolgend noch näher ausgeführt wird.

Weiterhin ist der wenigstens eine erste Führungsschenkel erfindungsgemäß von einem ersten Aktuator angetrieben in wenigstens einem Translationsfreiheitsgrad relativ zu der Materialausgabeeinheit verlagerbar, d.h. der wenigstens eine erste Führungsschenkel kann in wenigstens einer Bewegungsrichtung durch einen ersten Aktuator unmittelbar oder mittelbar bewegt werden. Die Bewegung in wenigstens einem Translationsfreiheitsgrad kann dabei beispielsweise eine Bewegung in vertikaler Richtung oder in horizontaler Richtung aufweisen. Eine vertikale Verstellbarkeit des wenigstens einen ersten Führungsschenkels ist besonders vorteilhaft, um beispielsweise einen zu formenden Abschnitt einer Oberfläche in vertikaler Richtung an die Schichthöhe einer Baustoffschicht anzupassen.

Erfindungsgemäß ist der wenigstens eine erste Führungsschenkel zudem von einem zweiten Aktuator angetrieben in wenigstens einem Rotationsfreiheitsgrad relativ zu der Materialausgabeeinheit verschwenkbar.

So kann beispielsweise im Falle eines vorstehend beschriebenen Überhangs (einer in vertikaler Richtung betrachtet gekrümmten Oberfläche) der abgeschiedenen Baustoffschichten der wenigstens eine erste Führungsschenkel bezogen auf ein Lot zu der Arbeitsfläche (bezogen auf die vertikale Richtung) in einem Anstellwinkel geneigt sein, wobei diese Verstellung durch den zweiten Aktuator bewirkt werden kann, der den wenigsten einen ersten Führungsschenkel relativ zu der Materialausgabe zu verschwenken vermag. Die Verschwenkung kann dabei beispielsweise um eine Rotationsachse erfolgen, die im Wesentlichen horizontal verläuft.

Anders als im Stand der Technik kann der wenigstens eine erste Führungsschenkel somit nicht nur in einer translatorischen Bewegungsrichtung, beispielsweise vertikal nach oben und unten, bewegt werden, sondern es ist zusätzlich möglich, mittels eines Aktuators den wenigstens einen ersten Führungsschenkel relativ zu der Materialausgabeeinheit zu verschwenken.

Auf diese Weise kann eine kontinuierliche und automatisierte Verstellung des wenigstens einen ersten Führungsschenkels in einer translatorischen wie auch einer rotatorischen Bewegungsrichtung erfolgen, wodurch nicht nur eine rein vertikale ausgerichtete erste Oberfläche eines geraden Bauteils mit Hilfe des wenigstens einen ersten Führungsschenkels geformt werden kann, sondern beispielsweise auch das Formen, insbesondere Glätten, einer gewölbten oder gekrümmten Oberfläche möglich wird.

Das Vorsehen eines ersten Aktuators und eines zweiten Aktuators zum Bewegen des wenigstens einen ersten Führungsschenkels ermöglichen dabei eine inkrementelle oder sogar stufenlose Anpassung der Relativposition des wenigstens einen ersten Führungsschenkels relativ zu der Materialausgabe in einem Translationsfreiheitsgrad sowie in einem Rotationsfreiheitsgrad.

Die automatisierte Verstellung mittels eines ersten und zweiten Aktuators ermöglicht, wie nachfolgend noch näher ausgeführt wird, zudem eine Steuerung der Relativposition des wenigstens einen ersten Führungsschenkels mit Hilfe einer Steuereinrichtung oder Steuereinheit. Dabei kann insbesondere auch die Steuereinrichtung zur Steuerung genutzt werden, die auch das Druckverfahren oder einzelne Verfahrensschritte der Vorrichtung steuert und/oder regelt.

Grundsätzlich ist es denkbar, dass der erste und der zweite Aktuator identisch sind, d.h. der wenigstens eine erste Führungsschenkel von einem einzigen Aktuator in einem Translationsfreiheitsgrad sowie in einem Rotationsfreiheitsgrad relativ zu der Materialausgabeeinheit bewegt werden kann.

Allerdings kann durch das Vorsehen zweier voneinander unabhängig betreibbarer Aktuatoren sowohl eine individuelle Bewegung des Führungsschenkels in einem Translationsfreiheitsgrad oder in einem Rotationsfreiheitsgrad als auch eine simultane Verstellung des wenigstens einen ersten Führungsschenkels relativ zu der Materialausgabeeinheit in einem Translationsfreiheitsgrad sowie in einem Rotationsfreiheitsgrad bewirkt werden, was besonders vorteilhaft ist.

Insbesondere kann vorgesehen sein, dass die Materialausgabeeinheit ausgebildet ist, als Baustoff fließfähig angemischten Beton ("Frischbeton") oder Mörtel bzw. Trockenmörtel abzuscheiden.

Vorzugsweise wird eine Betonrezeptur mit kleiner Gesteinskörnung angestrebt. Insbesondere kann ein Beton vorgesehen sein, der schnell abbindet und insbesondere eine hohe Grünstandfestigkeit aufweist. Es kann auch vorgesehen sein, dass der Beton eines oder mehrere Additive aufweist, beispielsweise um ein zu schnelles Austrocknen zu verhindern, um die Pumpfähigkeit zu erhöhen und/oder um die Farbe zu modifizieren.

Es kann beispielsweise eine Gesteinskörnung von bis zu 10 mm oder mehr, vorzugsweise von bis zu 6 mm, besonders bevorzugt von bis zu 4 mm vorgesehen sein.

Alternativ zur Verwendung von Beton oder Mörtel als Baustoff kann aber auch ein beliebiger anderer Baustoff vorgesehen sein, der sich zur Fertigung bzw. zur Errichtung von Bauwerken oder deren Bauteilen eignen kann, insbesondere Polymerbeton, Gips, Lehm, ein Kunststoff, vorzugsweise ein thermoplastischer Kunststoff, aber auch Metalle oder Legierungen. Im Rahmen der Erfindung können grundsätzlich beliebige Baustoffe vorgesehen sein.

Grundsätzlich kann das Bauteil aus einem, zwei, drei, vier oder noch mehr Ausgangsmaterialien bzw. Baustoffen hergestellt werden.

Beispielsweise können verschiedene Betonmischungen, Kunststoffe, Metalle und/oder Legierungen beliebig miteinander kombiniert werden.

Die Materialausgabeeinheit kann ausgebildet sein, um den Baustoff in einer definierten Form auszubringen, beispielsweise in Druckbahnen mit rechteckigen oder runden Kanten. Die einzelnen Druckbahnen können im Querschnitt beispielsweise rechteckig (quadratisch oder länglich), rund oder oval ausgebracht werden. Vorzugsweise gibt die Materialausgabeeinheit den Baustoff in der vorgesehenen Wandungsdicke des zu druckenden Bauteils aus.

Die erste Oberfläche kann insbesondere eine der beiden die Wandungsdicke seitlich begrenzenden Oberflächen aufweisen.

Weiterhin kann die Vorrichtung wenigstens einen zweiten Führungsschenkel zum Formen einer zweiten Oberfläche der abgeschiedenen einen oder mehreren Baustoffschichten aufweisen, der von einem Aktuator angetrieben wenigstens in einem Translationsfreiheitsgrad relativ zu der Materialausgabeeinheit verlagerbar ist und von einem weiteren Aktuator angetrieben wenigstens in einem Rotationsfreiheitsgrad relativ zu der Materiaausgabeeinheit verschwenkbar ist.

Demgemäß finden die vorstehenden Ausführungen bezüglich des wenigstens einen ersten Führungsschenkels auch auf den wenigstens einen zweiten Führungsschenkel Anwendung.

Der Aktuator zur angetriebenen Verlagerung des wenigstens einen zweiten Führungsschenkels wenigstens in einem Translationsfreiheitsgrad relativ zu der Materialausgabeeinheit weist den ersten Aktuator zur angetriebenen Verlagerung des wenigstens einen ersten Führungsschenkels wenigstens in einem Translationsfreiheitsgrad relativ zu der Materialausgabeeinheit auf und/oder einen dritten Aktuator.

Das heißt, dass der wenigstens eine zweite Führungsschenkel von dem ersten Aktuator zur angetriebenen Verlagerung des wenigstens einen ersten Führungsschenkels wenigstens in einem Translationsfreiheitsgrad relativ zu der Materialausgabeeinheit angetrieben werden kann, woraus sich eine simultane Verlagerung des wenigstens einen ersten Führungsschenkels und des wenigstens einen zweiten Führungsschenkels ergeben kann.

Bei dieser Lösung kann insbesondere eine erste Kupplungsanordnung vorgesehen sein, mittels derer wenigstens einer des wenigstens einen ersten Führungsschenkels und des wenigstens einen zweiten Führungsschenkels mit dem ersten Aktuator verbunden ist.

Alternativ oder zusätzlich kann jedoch auch ein dritter Aktuator zur angetriebenen Verlagerung des wenigstens einen zweiten Führungsschenkels wenigstens in einem Translationsfreiheitsgrad relativ zu der Materialausgabeeinheit vorgesehen sein kann. Hieraus kann sich eine von der Translationsbewegung des wenigstens einen ersten Führungsschenkels unabhängige Translationsbewegung des wenigstens einen zweiten Führungsschenkels relativ zu der Materialausgabeeinheit ergeben.

Der Aktuator zur angetriebenen Verschwenkung des wenigstens einen zweiten Führungsschenkels wenigstens in einem Rotationsfreiheitsgrad relativ zu der Materialausgabeeinheit weist weiterhin den zweiten Aktuator zur angetriebenen Verschwenkung des wenigstens einen ersten Führungsschenkels wenigstens in einem Rotationsfreiheitsgrad relativ zu der Materialausgabeeinheit auf und/oder einen vierten Aktuator.

Das heißt, dass der wenigstens eine zweite Führungsschenkel auch von dem zweiten Aktuator zur angetriebenen Verschwenkung des wenigstens einen ersten Führungsschenkels wenigstens in einem Rotationsfreiheitsgrad relativ zu der Materialausgabeeinheit angetrieben werden kann, woraus sich wiederum eine simultane Verschwenkung des wenigstens einen ersten Führungsschenkels und des wenigstens einen zweiten Führungsschenkels relativ zu der Materialausgabeeinheit ergeben kann.

Auch bei dieser Lösung kann insbesondere eine zweite Kupplungsanordnung vorgesehen sein, mittels derer wenigstens einer des wenigstens einen ersten Führungsschenkels und des wenigstens einen zweiten Führungsschenkels mit dem zweiten Aktuator verbunden ist.

Alternativ oder zusätzlich kann jedoch auch ein vierter Aktuator zur angetriebenen Verschwenkung des wenigstens einen zweiten Führungsschenkels wenigstens in einem Rotationsfreiheitsgrad relativ zu der Materialausgabeeinheit vorgesehen sein kann. Hieraus kann sich eine von der Schwenkbewegung des wenigstens einen ersten Führungsschenkels unabhängige Schwenkbewegung des wenigstens einen zweiten Führungsschenkels relativ zu der Materialausgabeeinheit ergeben.

Eine Lösung mit wenigstens einer Kupplungsanordnung, bevorzugt mit der ersten und der zweiten Kupplungsanordnung, hat den Vorteil, dass weniger als vier Aktuatoren, insbesondere nur zwei Aktuatoren, vorgesehen werden müssen, um die Führungsschenkel simultan in einem Translationsfreiheitsgrad und in einem Rotationsfreiheitsgrad relativ zu der Materialausgabeeinheit bewegen zu können.

Eine Lösung mit vier voneinander unabhängig betreibbaren Aktuatoren wiederum bringt den Vorteil, dass die Führungsschenkel, insbesondere der wenigstens eine erste Führungsschenkel von dem ersten und zweiten Aktuator und der wenigstens eine zweite Führungsschenkel von dem dritten und vierten Aktuator, individuell und unabhängig voneinander jeweils in einem Translationsfreiheitsgrad und in einem Rotationsfreiheitsgrad relativ zu der Materialausgabeeinheit bewegt werden können.

Insbesondere kann unabhängig von einer etwaigen Kupplung der Führungsschenkel mittels einer ersten und/oder zweiten Kupplungsvorrichtung und der Anzahl der vorgesehenen Aktuatoren vorgesehen sein, dass der wenigstens eine erste Führungsschenkel und der wenigstens eine zweite Führungsschenkel in dem gleichen Translationsfreiheitsgrad und in dem gleichen Rotationsfreiheitsgrad verstellbar sind, beispielsweise beide in einer im wesentlichen vertikalen Richtung verlagerbar sind und beispielsweise jeweils um eine Drehachse verschwenkbar sind, wobei die Drehachsen im Wesentlichen parallel zueinander angeordnet sind.

Auf diese Weise ist es möglich, die beiden Führungsschenkel nicht nur simultan, sondern auch in symmetrischer Weise relativ zu der Materialausgabeeinheit zu verstellen, wenn dies gewünscht ist. Eine Symmetrieachse hierfür könnte beispielsweise eine Vertikalachse der Materialausgabeeinheit sein. Die erste und die zweite Oberfläche, welche von dem wenigstens einen ersten Führungsschenkel und von dem wenigstens einen zweiten Führungsschenkel geformt werden, können entsprechend insbesondere parallel zueinander verlaufen bzw. eine im Wesentlichen konstant bleibende Wandungsdicke seitlich begrenzen.

Die von dem ersten Aktuator angetriebene Verlagerung des wenigstens einen ersten Führungsschenkels relativ zu der Materialausgabeeinheit in wenigstens einem Translationsfreiheitsgrad umfasst beispielsweise eine Bewegung des wenigstens einen ersten Führungsschenkels in vertikaler Richtung oder in horizontaler Richtung.

Insbesondere eine Bewegung in vertikaler Richtung ist besonders vorteilhaft und kann im Sinne der vorliegenden Erfindung auch von der Richtung eines Lots auf die Arbeitsfläche abweichen. Entscheidend ist stattdessen, dass bei einer Bewegung des wenigstens einen ersten Führungsschenkels in vertikaler Richtung eine Bewegung stattfindet, die überwiegend in vertikaler Richtung, d.h. in Richtung zu der Arbeitsfläche hin und von dieser weg erfolgt.

Demgemäß ist eine Bewegung in horizontaler Richtung auch nicht notwendigerweise eine Bewegung senkrecht zu einem Lot auf die Arbeitsfläche. Stattdessen ist hiermit eine Bewegung entlang einer Achse parallel zu der Druckbahn oder in einer Ebene mit einer Achse parallel zu der Druckbahn gemeint. Insbesondere eine Bewegung des wenigstens einen Führungsschenkels in horizontaler Richtung zu der Achse parallel zu der Druckbahn hin oder von dieser weg ermöglicht eine Anpassung der Wanddicke einer gedruckten Wand (als Bauteil).

Die von dem zweiten Aktuator angetriebene Verschwenkung des wenigstens einen ersten Führungsschenkels relativ zu der Materialausgabeeinheit in wenigstens einem Rotationsfreiheitsgrad kann weiter eine Verschwenkbewegung des wenigstens einen ersten Führungsschenkels um eine Rotationsachse umfassen, die sich in horizontaler Richtung und insbesondere parallel zur Druckbahn erstreckt oder die sich in vertikaler Richtung erstreckt.

Dabei ist insbesondere eine Bewegung um eine Rotationsachse, die sich parallel zu der Druckbahn erstreckt, vorteilhaft, um einen Anstellwinkel des wenigstens einen ersten Führungsschenkels an ein Lot zur Arbeitsfläche zu erreichen, der die zuvor beschriebene Glättung von beispielsweise einer Oberfläche mit Überhang ermöglicht.

Ein solcher Anstellwinkel kann beispielweise definiert sein durch eine Führungsebene des Führungsschenkels, die mit einem Lot zur Arbeitsfläche einen Anstellwinkel von 0 Winkelgrad (bei einer zu glättenden Wand mit einer zu formenden senkrechten Wandfläche) bis zu 180 Winkelgrad einschließt.

Um gegebenenfalls eine noch größere Flexibilität und weitere Einstellmöglichkeiten bereit zu stellen, kann gemäß einer Weiterbildung der Erfindung vorgesehen sein, dass der wenigstens eine erste und/oder der wenigstens eine zweite Führungsschenkel von einem oder mehreren weiteren Aktuatoren angetrieben zumindest in einem weiteren Translationsfreiheitsgrad relativ zu der Materialausgabeeinheit verlagerbar und/oder in einem weiteren Rotationsfreiheitsgrad relativ zu der Materialausgabeeinheit verschwenkbar ist bzw. sind.

So kann beispielsweise zusätzlich zu einer vertikalen Verstellmöglichkeit, wie vorstehend beschrieben, auch eine horizontale Verstellmöglichkeit mittels eines Aktuators oder eine Verschwenkbarkeit um eine weitere Rotationsachse von Vorteil sein, um mit Hilfe des wenigstens einen ersten Führungsschenkels und/oder des wenigstens einen zweiten Führungsschenkels Oberflächen mit komplexeren Konturen zu formen.

Bezüglich der weiteren Vorteile, die sich aus dem Einsatz eines oder mehrerer weiterer Aktuatoren ergeben, wird auf die vorstehenden Ausführungen insbesondere zu den ersten und zweiten Aktuatoren verwiesen.

Alternativ oder zusätzlich kann vorgesehen sein, dass die Vorrichtung eine Steuereinheit aufweist, die dazu eingerichtet ist, wenigstens einen der Aktuatoren zum Bewegen des wenigstens einen ersten Führungsschenkels und/oder des wenigstens einen zweiten Führungsschenkels anzusteuern.

Eine solche Steuereinheit kann beispielsweise auch eine von der Vorrichtung separat ausgebildete und angeordnete Steuereinheit umfassen, die geeignet ist, kabelgebunden oder kabellos, beispielsweise in der Art einer Fernbedienung den wenigstens einen Aktuator zum Bewegen des wenigstens einen ersten Führungsschenkels und/oder des wenigstens einen zweiten Führungsschenkels anzusteuern.

Gemäß einer Weiterbildung der Erfindung kann die Vorrichtung ferner wenigstens eine Steuereinrichtung aufweisen, die dazu eingerichtet ist, die Aktuatorbaugruppe zum Bewegen der Materialausgabeeinheit über die Arbeitsfläche anzusteuern.

Wie bereits vorstehend ausgeführt, kann die Steuereinrichtung zur Berechnung der Druckbahn anhand der eingegebenen 3D-Daten eingerichtet sein. Die Steuereinrichtung kann beispielsweise eingerichtet sein, um aus den 3D-Daten des Bauteils ein virtuelles Modell des Bauteils im bekannten STL-Format ("Standard Triangulation/Tesselation Language"-Format) oder STEP-Format ("Standard for the Exchange of Product model data"-Format) zu berechnen. Im Rahmen des STL-Formats können die Bauteildaten mit Hilfe von Dreiecksfacetten beschrieben werden. Das Prinzip ist bekannt und wird demnach nicht näher beschrieben.

Eine STL-Schnittstelle ist eine Standardschnittstelle vieler CAD-Systeme. Vorliegend kann die Steuereinrichtung eingerichtet sein, um aus beliebigen 3D-CAD-Daten zunächst STL-Daten für die Weiterverarbeitung zu berechnen. Die Steuereinrichtung kann allerdings auch eingerichtet sein, bereits 3D-Daten im STL-Format aufzunehmen und weiterzuverarbeiten. Grundsätzlich kann auch ein beliebiges anderes Datenformat vorgesehen sein.

Unabhängig davon, ob die STL-Daten von der Steuereinrichtung selbst erzeugt oder nur an diese übertragen wurden, kann die Steuereinrichtung eingerichtet sein, um anhand der STL-Daten (oder anhand sonstiger 3D-Daten) die Bauteildaten in Druckerdaten für einen 3D-Druck (bzw. für die additive Fertigung) umzuwandeln. Hierfür kann unter anderem vorgesehen sein, die 3D-Daten bzw. STL-Daten in einzelne zu druckende Schichten umzuwandeln (sogenanntes "Slicen"), wonach für die einzelnen Schichten die Druckbahnen berechnet werden, um die Bewegungen der Materialausgabeeinheit vorzugeben.

Die Steuereinrichtung kann zudem dazu eingerichtet sein, die Materialausgabeeinheit in Abhängigkeit der Druckbahnen anzusteuern und/oder um die Ausbringung bzw. das Abscheiden des Baustoffs zu regulieren.

Diese Steuereinrichtung kann ferner die wenigstens eine Steuereinheit zum Ansteuern der Aktuatoren zum Bewegen des wenigstens einen ersten und/oder wenigstens einen zweiten Führungsschenkels umfassen. Bei dieser Ausgestaltung wird die Steuereinrichtung der Vorrichtung somit auch dazu genutzt werden, wenigstens einen oder mehrere der Aktuatoren zum Verstellen des wenigstens einen ersten Führungsschenkels und/oder des wenigstens einen zweiten Führungsschenkels relativ zu der Materialausgabeeinheit zu steuern. Beispielsweise kann hierdurch je nach Architektur der Wand des Bauteils und damit basierend auf den zugehörigen 3D-Daten der Führungsschenkel entsprechend angepasst werden, d.h. beispielsweise in seiner Höhe (durch eine angesteuerte vertikale Translationsbewegung) und/oder in Hinblick auf seinen Anstellwinkel (durch eine angesteuerte Schwenkbewegung um eine horizontale Drehachse parallel zur Druckbahn) verstellt werden, um das gewünschte Aussehen des Bauteils, insbesondere der Wand, gemäß den 3D-Daten anzupassen.

Dies kann vorliegend für jeden sogenannten Slice, d.h. für jede Schicht, die gedruckt wird, erreicht werden. Weiterhin kann auch dann, wenn innerhalb einer Schicht eine Änderung der Relativstellung des wenigstens einen ersten Führungsschenkels und/oder des wenigstens einen zweiten Führungsschenkels zu der Materialausgabeeinheit erforderlich sein sollte, diese mittels der Ansteuerung des wenigstens einen der Aktuatoren erfolgen.

Alternativ kann selbstverständlich auch eine zusätzliche Steuereinheit zum Steuern von wenigstens einem oder mehreren der Aktuatoren zum Verstellen des wenigstens einen ersten Führungsschenkels und/oder des wenigstens einen zweiten Führungsschenkels relativ zu der Materialausgabeeinheit vorgesehen sein, wenn dies gewünscht ist. Auf die vorstehenden Ausführungen betreffend mögliche Ausgestaltungen einer Steuereinheit und einer Steuereinrichtung wird auch für die denkbare Ausgestaltung einer zusätzlichen Steuereinheit Bezug genommen. Insbesondere kann auch vorgesehen sein, dass die Steuereinrichtung und die Steuereinheit in kommunikativer Verbindung miteinander stehen.

Die Materialausgabeeinheit kann vorliegend insbesondere ein Gehäuse aufweisen, wobei das Gehäuse wenigstens eine Aufnahmeöffnung aufweist.

Zum Formen einer Oberfläche kann bzw. können optional der wenigstens eine erste Führungsschenkel und/oder der wenigstens eine zweite Führungsschenkel in einer Arbeitsstellung, in der der wenigstens eine erste Führungsschenkel und/oder der wenigstens eine zweite Führungsschenkel eine erste und/oder zweite Oberfläche zu formen vermögen, zumindest abschnittsweise durch die wenigstens eine Aufnahmeöffnung aus dem Inneren des Gehäuses ragen. Dies umfasst auch Lösungen, bei denen der wenigstens eine erste Führungsschenkel und/oder der wenigstens eine zweite Führungsschenke vollständig aus dem Gehäuse ausgefahren sind, d.h. kein Abschnitt der Führungsschenkel mehr in dem Gehäuse aufgenommen ist.

Weiterhin kann bzw. können optional der wenigstens eine erste Führungsschenkel und/oder der wenigstens eine zweite Führungsschenkel in einer Arbeitsstellung, in der der wenigstens eine erste Führungsschenkel und/oder der wenigstens eine zweite Führungsschenkel eine erste und/oder zweite Oberfläche zu formen vermögen, zumindest abschnittsweise durch die wenigstens eine Aufnahmeöffnung in das Innere des Gehäuses ragen. Dies ermöglicht ein breiteres Anwendungsspektrum, da die Verlagerung der Führungsschenkel in vertikaler Richtung nach oben nicht, wie im Stand der Technik, durch die Unterseite der Materialausgabeeinheit, insbesondere durch Teile des Gehäuses behindert wird.

Alternativ oder zusätzlich kann bzw. können optional der wenigstens eine erste Führungsschenkel und/oder der wenigstens eine zweite Führungsschenkel in einer Ruhestellung, in der der wenigstens eine erste Führungsschenkel und/oder der wenigstens eine zweite Führungsschenkel keine erste und/oder zweite Oberfläche zu formen vermögen, zumindest abschnittsweise, vorzugsweise zumindest überwiegend, beispielweise nahezu vollständig durch die wenigstens eine Aufnahmeöffnung in das Innere des Gehäuses aufgenommen sein.

Eine solche Ruhestellung, bei der der wenigstens eine erste Führungsschenkel und/oder der wenigstens eine zweite Führungsschenkel zumindest abschnittsweise, vorzugsweise zumindest überwiegend, beispielweise nahezu vollständig in dem Gehäuse aufgenommen sein kann, hat den Vorteil, dass zwischen einer Anwendung, in der ein Formen und Stabilisieren der ausgebrachten Baustoffschicht gewünscht ist, und zwischen einer Anwendung, in der ein Formen und Stabilisieren der ausgebrachten Baustoffschicht nicht benötigt oder gewünscht ist, gewechselt werden kann, ohne dass eine manuelle Demontage des Führungsschenkels bzw. der Führungsschenkel erforderlich ist, wie dies beispielsweise im Stand der Technik gezeigt ist (vgl. hierzu KR 10 1666181 B1).

Alternativ oder zusätzlich kann wenigstens einer der Aktuatoren zum Bewegen des wenigstens einen ersten Führungsschenkels und/oder des wenigstens einen zweiten Führungsschenkels relativ zu der Materialausgabeeinheit in dem Gehäuse aufgenommen sein kann. Dementsprechend kann durch die wenigstens eine Aufnahmeöffnung eine unmittelbare oder mittelbare mechanische Verbindung des wenigstens einen ersten Führungsschenkels und/oder der wenigstens einen zweiten Führungsschenkels mit dem wenigstens einen innerhalb des Gehäuses aufgenommenen Aktuator bereitgestellt werden.

Durch das Vorsehen eines Gehäuses kann ein geschützter Aufnahmeraum für die wenigstens teilweise darin aufgenommenen Komponente(n), beispielweise eines oder mehrerer darin aufgenommener Aktuatoren und/oder des wenigstens einen ersten Führungsschenkels und/oder des wenigstens einen zweiten Führungsschenkels, insbesondere in der Ruhestellung, bereitgestellt werden. Dies ist insbesondere in Hinblick auf etwaige Kollisionen im Arbeitsraum und damit verbundene Folgeschäden von Vorteil. Weiterhin können die in dem Gehäuse aufgenommenen Komponenten der Vorrichtung auch gegen Verschmutzungen und weitere Fremdeinflüsse im Baustellenbereich geschützt sein, was sich positiv auf deren Lebensdauer auswirken kann.

Wenigstens einer oder mehrere der Aktuatoren können einen motorischen Antrieb, insbesondere einen Servomotor, einen Closed-Loop-Motor, einen Schrittmotor oder dergleichen aufweisen, der geeignet ist, seine aktuelle Position an eine Steuereinheit oder Steuereinrichtung zurückzugeben. Bei einer Ausgestaltung als Servomotor kann dieser zudem aufgrund einer vergleichsweise flachen Bauweise in dem Gehäuse aufgenommen sein, ohne dabei die Außenabmessungen der Materialausgabeeinheit nennenswert zu erhöhen. Auch dieses ist in Zusammenhang von einem 3D-Betondrucker von erheblichen Vorteil, da die Materialausgabeeinheit nach Möglichkeit so wenig Bauraum wie nötig in Anspruch nehmen sollte. Um insbesondere auch filigrane Strukturen drucken zu können, sollte eine gute Zugänglichkeit der Materialausgabeeinheit, insbesondere der Düse, auch an enge Bearbeitungsbereiche sichergestellt sein, was beispielsweise durch ein schlank gebautes Gehäuse erreicht werden kann.

Selbstverständlich ist es jedoch ebenfalls denkbar, die Aktuatoren beispielsweise außerhalb des Gehäuses anzubringen, wenn dies gewünscht ist.

Die Aktuatoren können weiterhin über wenigstens eine Übertragungs- und/oder Verbindungsstruktur mit dem wenigstens einen ersten Führungsschenkel und/oder dem wenigstens einen zweiten Führungsschenkel verbunden sein, um eine Antriebsbewegung des Aktuators, beispielsweise einer Abtriebswelle eines motorischen Antriebs, zur Bewegung des zugeordneten verbundenen Führungsschenkels an diesen zu übertragen.

Die wenigstens eine Übertragungs- und/oder Verbindungsstruktur kann insbesondere eine Zahnstange, Antriebsstange, Steuerstange und/oder Spindel umfassen, die unmittelbar oder mittelbar mit dem wenigstens einen ersten Führungsschenkel und/oder dem wenigstens einen zweiten Führungsschenkel verbunden ist. Dabei kann eine unmittelbare Verbindung ohne wenigstens ein dazwischen geschaltetes Mitnehmerelement erfolgen und eine mittelbare Verbindung wenigstens ein dazwischen geschaltetes Mitnehmerelement aufweisen.

Weiterhin kann die Übertragung einer Antriebsbewegung von einem Aktuator direkt auf den verbundenen wenigstens einen ersten Führungsschenkel und/oder den wenigstens einen zweiten Führungsschenkel übertragen werden, d.h. ohne Umwandlung und ggf. Übersetzung. Alternativ kann es jedoch auch wünschenswert sein, dass beispielsweise eine drehende Antriebsbewegung eines Aktuators zu einer translatorischen Bewegung umgewandelt auf den verbundenen wenigstens einen ersten Führungsschenkel und/oder den wenigstens einen zweiten Führungsschenkel übertragen wird. In gleicher Weise kann auch eine Übersetzung beispielsweise eines Antriebsdrehmoments sinnvoll sein.

So kann beispielsweise eine Zahnstange mit einem von einem Servomotor angetriebenen Zahnrad in Eingriff stehen und infolge der Drehbewegung der Abtriebswelle des Servomotors einen mit der Zahnstange unmittelbar oder mittelbar verbundenen Führungsschenkel translatorisch verlagern (Zahnstangenantrieb). Weiterhin kann auch eine Übertragungsstruktur in der Art eines Schneckengetriebes eine Drehbewegung einer Abtriebswelle in eine translatorische Bewegung oder in Kombination mit einem Lagerpunkt in eine Verschwenkbewegung umwandeln und auf einen unmittelbar oder mittelbar verbundenen Führungsschenkel übertragen.

Schließlich kann die Vorrichtung bei einer Ausgestaltung mit einem Gehäuse der Materialausgabeeinheit innerhalb des Gehäuses zusätzliche Führungsstrukturen oder an das Gehäuse angeformte Führungsstrukturen zur Führung einer Bewegung des wenigstens einen ersten Führungsschenkels und/oder des wenigstens einen zweiten Führungsschenkels aufweisen, beispielsweise eine Führungskulisse.

Für eine besonders kompakte Bauweise, ohne dass eine manuelle Demontage des Führungsschenkels bzw. der Führungsschenkel erforderlich ist, wie dies beispielsweise im Stand der Technik gezeigt ist (vgl. hierzu KR 10 1666181 B1), wird weiterhin gemäß einem zweiten Aspekt der Erfindung vorgeschlagen: eine Vorrichtung zur additiven Fertigung eines Bauteils, aufweisend eine Materialausgabeeinheit zur Abscheidung eines Baustoffes, und eine Aktuatorbaugruppe, die ausgebildet ist, die Materialausgabeeinheit über eine Arbeitsfläche zu bewegen, um den Baustoff schichtenweise in vorgegebenen Druckbahnen abzuscheiden, sowie wenigstens einen ersten Führungsschenkel, der dazu ausgebildet ist, eine erste Oberfläche der von der Materialausgabeeinheit einen oder mehreren abgeschiedenen Baustoffschichten in einer Arbeitsstellung des wenigstens einen ersten Führungsschenkels zu formen, wobei der wenigstens eine erste Führungsschenkel von einem ersten Aktuator angetrieben in wenigstens einem Freiheitsgrad, insbesondere in einem Translationsfreiheitsgrad relativ zu der Materialausgabeeinheit bewegbar ist.

Die Materialausgabeeinheit kann auch gemäß dem zweiten Aspekt der Erfindung ein Gehäuse aufweisen, wobei der wenigstens eine erste Führungsschenkel von einem ersten Aktuator angetrieben aus einer Arbeitsstellung, in welcher der wenigstens eine erste Führungsschenkel die erste Oberfläche zu formen vermag, in eine Ruhestellung bewegt werden kann, in welcher der wenigstens eine erste Führungsschenkel wenigstens abschnittsweise, vorzugsweise überwiegend, beispielsweise nahezu vollständig in dem Gehäuse der Materialausgabeeinheit aufgenommen sein kann.

Die vorstehenden Ausführungen zu Ausgestaltungsvarianten der Erfindung gemäß dem ersten Aspekt finden soweit anwendbar auch Anwendung auf die Ausgestaltung der Erfindung gemäß dem zweiten Aspekt.

Gemäß dem zweiten Aspekt reicht beispielsweise eine angetriebene translatorische Verlagerungsmöglichkeit des wenigstens einen ersten (und/oder wenigstens eines zweiten Führungsschenkels) in beispielsweise die vertikale Richtung aus, um diesen aus einer Arbeitsstellung, in welcher der wenigstens eine erste Führungsschenkel (und/oder der wenigstens eine zweite Führungsschenkel) wenigstens eine erste (und/oder zweite) Oberfläche formen kann, in die Ruhestellung zu verlagern, in der er zumindest abschnittsweise geschützt innerhalb des Gehäuses der Materialausgabeeinheit aufgenommen ist.

Weiterhin kann die Materialausgabeeinheit für beispielweise den Transport an eine andere Baustelle durch das Zurückziehen des Führungsschenkels bzw. der Führungsschenkel durch die wenigstens eine Aufnahmeöffnung in das Innere des Gehäuses besonders kompakt gehalten werden. Der bzw. die Führungsschenkel sind gut geschützt in der Materialausgabeeinheit aufgenommen, wodurch das Risiko einer unerwünschten Verformung beim Transport oder einer Beschädigung des Führungsschenkels bzw. der Führungsschenkel vermieden oder zumindest verringert werden.

Dabei kann im Falle mehrerer Führungsschenkel, jedem Führungsschenkel eine eigene Aufnahmeöffnung an dem Gehäuse zugeordnet sein, durch die er in das Innere des Gehäuses verbracht werden kann, oder es kann eine gemeinsame Aufnahmeöffnung für mehrere Führungsschenkel vorgesehen sein.

Alternativ oder zusätzlich kann die Verstellbarkeit des Führungsschenkels bzw. der Führungsschenkel, unabhängig davon ob diese im Kontext des ersten Erfindungsaspekts offenbart ist oder im Kontext des zweiten Erfindungsaspekts, in eine Ruhestellung im Inneren des Gehäuses auch zur Reinigung des Führungsschenkels bzw. der Führungsschenkel genutzt werden, wie nachfolgend detailliert ausgeführt wird.

So kann die Vorrichtung eine Reinigungsanordnung mit wenigstens einem Reinigungsabschnitt aufweisen, der dem wenigstens einen ersten Führungsschenkel und/oder dem wenigstens einen zweiten Führungsschenkel zugeordnet ist und zumindest abschnittsweise in reinigender Anlage an dem zugeordneten Führungsschenkel angeordnet ist, derart, dass das zugeordnete Reinigungselement bei einer Verlagerung und/oder Rotation des zugeordneten wenigstens einen ersten Führungsschenkels und/oder des zugeordneten wenigstens einen zweiten Führungsschenkels relativ zu dem zugeordnete Reinigungsabschnitt Baustoffrückstände am anliegenden Führungsschenkel abzustreifen vermag.

Baustoffrückstände, d.h. anhaftendes Druckmaterial, an dem wenigstens einen ersten Führungsschenkel und/oder dem wenigstens einen zweiten Führungsschenkel können insbesondere dann, wenn der oder die Führungsschenkel für eine Weile nicht zum Formen einer Oberfläche genutzt werden, antrocknen, und bei der nächsten Verwendung des Führungsschenkels oder der Führungsschenkel zum Formen und Stabilisieren einer Oberfläche zu Riefen oder Unebenheiten an der zu formenden Oberfläche führen.

Demgemäß bietet eine Reinigungsanordnung den Vorteil derartige Rückstände durch ein Abstreifen an dem Reinigungsabschnitt zu vermeiden.

Dabei ist insbesondere vorteilhaft, dass die relative Verlagerungsbewegung und/oder Verschwenkbewegung des wenigstens einen ersten Führungsschenkels und/oder des wenigstens einen zweiten Führungsschenkels genutzt wird, um durch Anlage an den Reinigungsabschnitt ein Abstreifen an diesem zu ermöglichen.

Alternativ oder zusätzlich wäre es auch möglich, dass der Reinigungsabschnitt mittels eines Aktuators relativ zu dem wenigstens einen ersten und/oder dem wenigstens einen zweiten Führungsschenkel bewegt wird, um eine entsprechende relative Abstreifbewegung zu ermöglichen.

Weiterhin kann der Reinigungsabschnitt an der Materialausgabeeinheit, bei einer Ausbildung der Materialausgabeeinheit mit einem Gehäuse an dem Gehäuse, insbesondere an oder im Bereich der wenigstens einen Aufnahmeöffnung des Gehäuses, angeordnet sein.

Diese spezifische Ausführungsform hat den Vorteil, dass der Reinigungsabschnitt einfach an das Gehäuse angeformt sein kann, beispielsweise in der Art eines Vorsprungs oder einer Kante. Alternativ ist aber natürlich ebenfalls möglich, dass der Reinigungsabschnitt als separates Element unabhängig von dem Gehäuse ausgebildet ist und an diesem angebracht, insbesondere fixiert ist.

Weiterhin kann bzw. können der wenigstens eine erste und/oder der wenigstens eine zweite Führungsschenkel in einer Ruhestellung, in welcher der wenigstens eine erste Führungsschenkel und/oder der wenigstens eine zweite Führungsschenkel die wenigstens eine erste und/oder zweite Oberfläche(n) nicht mehr zu formen vermag bzw. vermögen, durch die Aufnahmeöffnung bzw. Aufnahmeöffnungen vollständig oder nahezu vollständig in das Innere des Gehäuse zurückgezogen werden und in dem Gehäuse der Materialausgabeeinheit aufgenommen sein.

Wie bereits ausgeführt, führt insbesondere die Nichtverwendung des bzw. der Führungsschenkel zu der potentiellen Trocknung von anhaftendem Druckmaterial und Bildung von unerwünschten Baustoffrückständen.

Wenn der Reinigungsabschnitt im Bereich der zum Einnehmen der Ruhestellung ohnehin zu passierenden Aufnahmeöffnung des Gehäuses angeordnet ist, erfolgt der Reinigungsvorgang vorteilhafterweise immer dann, wenn eine Reinigung erfahrungsgemäß erforderlich ist, um die Bildung von unerwünschten angetrockneten Baustoffrückständen zu verhindern.

Gemäß einer Weiterbildung kann die Reinigungsanordnung weiter ein elastisches Element umfassen, das den wenigstens einen ersten Führungsschenkel und/oder den wenigstens einen zweiten Führungsschenkel gegen den zugeordneten Reinigungsabschnitt vorzuspannen vermag.

Diese Weiterbildung bietet den weiteren Vorteil, dass die Effizienz der Reinigungsanordnung hierdurch weiter verbessert werden kann. Das elastische Element stellt eine vorgegebene Vorspannung und damit einen vorgegebenen Andruck des zugeordneten Führungsschenkels gegen den Reinigungsabschnitt sicher, wodurch eine zuverlässige Reinigung bereitgestellt werden kann.

Das elastische Element kann unterschiedliche Ausgestaltungen umfassen, solange es nur geeignet ist, eine Vorspannung auf den zugeordneten Führungsschenkel zu übertragen, so dass dieser gegen den Reinigungsabschnitt vorgespannt ist, beispielsweise ein Federelement, ein Kunststoff- oder Gummielement und dergleichen.

Weiterhin kann das elastische Element seinerseits in reinigender Anlage an dem zugeordneten vorgespannten Führungsschenkel angeordnet sein, derart, dass es bei einer Verlagerung und/oder Rotation des zugeordneten wenigstens einen ersten Führungsschenkels und/oder des zugeordneten wenigstens einen zweiten Führungsschenkels relativ zu dem zugeordnete elastischen Element Baustoffrückstände am anliegenden Führungsschenkel abzustreifen vermag. Somit wirkt das elastische Element in ähnlicher Weise als Reinigungsabschnitt wie der Reinigungsabschnitt, gegen den das elastische Element den zugeordneten Führungsschenkel vorzuspannen vermag. Der Führungsschenkel wird bei dieser Ausgestaltung als von zwei Seiten in Anlage gehalten und streift bei einer Bewegung relativ zu dem Reinigungsabschnitt und dem elastischen Element, Rückstände von Druckmaterial an diesen ab.

Insbesondere kann das elastische Element auch an der wenigstens einen Aufnahmeöffnung des Gehäuses angebracht sein, beispielsweise an das Gehäuse im Bereich der wenigstens einen Aufnahmeöffnung des Gehäuses angeformt, angespritzt oder als separates Element lösbar an dem Gehäuse befestigt sein.

Das elastische Element kann in einer denkbaren Ausgestaltung in der Art einer separat geformten Gummilippe ausgebildet sein, die an der wenigstens einen Aufnahmeöffnung des Gehäuses angebracht sein kann.

Vorstehend ist bereits ausgeführt worden, dass das elastische Element eine Teilfunktion des Reinigungsabschnitts übernehmen kann.

Dementsprechend kann das elastische Element auch beispielsweise einen Vorsprung oder eine Kante aufweisen, insbesondere ein Anlagekontur aufweisen, die eine Negativform zu der Kontur des zugeordneten Führungsschenkels bildet und/oder ein umlaufendes Gummielement umfassen, das in die Aufnahmeöffnung eingesetzt ist. In diesem Fall umspannt das elastische Element den zugeordneten Führungsschenkel und übernimmt zugleich die Funktion des elastischen Element zur Vorspannung als auch des Reinigungsabschnitts.

Weitere alternative Ausführungsformen sind selbstverständlich ebenfalls denkbar, beispielsweise Lösungen mit mehreren Reinigungsabschnitten, elastischen Elementen oder einem Element, das sowohl die Funktion eines elastischen Elements als auch eines Reinigungsabschnitts erfüllt.

Alternativ oder zusätzlich kann die Vorrichtung eine Schmieranordnung umfassen, die dazu ausgebildet ist, den wenigstens einen ersten Führungsschenkel und/oder den wenigstens einen zweiten Führungsschenkel zumindest abschnittsweise mit einem fluidischen Schmierfilm zu benetzen. Ein solcher fluidischer Schmierfilm dient insbesondere dazu, die Reibung zwischen dem wenigstens einen ersten Führungsschenkel und/oder dem wenigstens einen zweiten Führungsschenkel und der von dem jeweiligen Führungsschenkel zu formenden ersten und/oder zweiten Oberfläche herabzusetzen und die zu formende Oberfläche auf diese Weise besonders effektiv zu glätten.

Dabei kann der Schmierfilm insbesondere auch Wasser als Schmierfluid aufweisen, das auf den wenigstens einen ersten Führungsschenkel und/oder den wenigstens einen zweiten Führungsschenkel aufgesprüht oder anderweitig aufgebracht wird.

Insbesondere kann bei einer Relativbewegung des wenigstens einen ersten Führungsschenkels und/oder des wenigstens einen zweiten Führungsschenkels relativ zu der Materialausgabeeinheit die Bewegung des Führungsschenkels für eine besonders einfache Benetzung genutzt werden, beispielsweise indem der Führungsschenkel die Schmieranordnung bei seiner Bewegung passiert.

In Kombination mit einer Reinigungsanordnung, wie vorstehend beschrieben, kann das Schmierfluid, insbesondere Wasser, bei einer Relativbewegung des wenigstens einen ersten Führungsschenkels und/oder des wenigstens einen zweiten Führungsschenkels relativ zu dem anliegenden Reinigungsabschnitt und/oder relativ zu dem anliegenden elastischen Element auf die Oberfläche des Führungsschenkels aufgebracht werden. Beispielsweise kann das elastische Element in der Art eines elastischen Schwamms ausgebildet sein, dem von der Reinigungsanordnung Wasser zugeführt wird, welches das elastische Element bei der relativen Abstreifbewegung in der Art eines Schmierfilm auf den zugeordneten Führungsschenkel aufzubringen vermag. Der mit Wasser benetzte Führungsschenkel kann auf diese Weise gereinigt werden und kann zugleich seinerseits mit seiner mit Wasser benetzten Oberfläche die zu formende Oberfläche der einen oder mehrere Baustoffschichten besonders effektiv glätten.

Gemäß einer Weiterbildung der Erfindung kann bzw. können der wenigstens eine erste Führungsschenkel und/oder der wenigstens eine zweite Führungsschenkel eine Längserstreckung entlang einer Mittellängsachse aufweisen, wobei der wenigstens eine erste Führungsschenkel und/oder der wenigstens eine zweite Führungsschenkel in einem senkrecht zu der (jeweiligen dem Führungsschenkel zugeordneten) Mittellängsachse verlaufenden Querschnitt eine zumindest abschnittsweise gekrümmte Kontur aufweist bzw. aufweisen.

Durch diese spezifische Kontur kann bzw. können der wenigstens eine erste Führungsschenkel und/oder der wenigstens eine zweite Führungsschenkel bei einer zu der abgeschiedenen Baustoffschicht seitlichen Anordnung eine Einlaufzone und/oder eine Auslaufzone bereitstellen. In einer häufigen Anwendungssituation, wenn der wenigstens eine erste Führungsschenkel und/oder der wenigstens eine zweite Führungsschenkel zum Formen der Wandoberfläche eines geraden wandartigen Bauteils genutzt werden, erstreckt sich die Mittellängsachse eines Führungsschenkels im Wesentlichen parallel zu vertikalen Richtung.

Alternativ oder zusätzlich kann vorgesehen sein, dass der wenigstens eine erste Führungsschenkel und/oder der wenigstens eine zweite Führungsschenkel eine Längserstreckung entlang einer Mittellängsachse aufweist bzw. aufweisen, wobei der wenigstens eine erste Führungsschenkel und/oder der wenigstens eine zweite Führungsschenkel in einem entlang der (jeweiligen) Mittellängsachse verlaufenden Längsschnitt eine zumindest abschnittsweise gekrümmte Kontur mit einem im wesentlichen geraden Führungsabschnitt aufweist bzw. aufweisen.

In der vorstehend beschriebenen häufigen Anwendungssituation kann der im wesentlichen gerade Führungsabschnitt eines Führungsschenkels sich im Wesentlichen parallel zur vertikalen Richtung erstrecken.

An dem freien Ende des wenigstens einen ersten Führungsschenkels und/oder des wenigstens einen zweiten Führungsschenkels kann dieser einen sich von der aufgebrachten Baustoffschicht weg weisenden Abschnitt aufweisen, der bei einer vertikalen Translationsbewegung des Führungsschenkels aus einer Ruhestellung in eine Arbeitsstellung eine Einlaufzone bilden kann, und bei einer vertikalen Translationsbewegung des Führungsschenkels aus einer Arbeitsstellung in eine Ruhestellung eine Auslaufzone bilden kann. Im Längsschnitt betrachtet kann dieser wegweisende Abschnitt eine gekrümmte Kontur aufweisen.

Weiterhin kann vorgesehen sein, dass der wenigstens eine erste Führungsschenkel und/oder der wenigstens eine zweite Führungsschenkel bezüglich der (jeweiligen) Mittellängsachse im wesentlichen achssymmetrisch ausgebildet ist bzw. sind.

Jeder der Führungsschenkel kann aus einem oder einer Kombination von mehreren Materialien hergestellt sein, wobei das Material eine ausreichende Steifigkeit für die formgebende Funktion des Führungsschenkels und zugleich eine nicht-haftende Oberfläche zumindest im Bereich des formgebenden Abschnitts des Führungsschenkels bereitstellen kann. Für die Bereitstellung einer nicht-haftenden Oberfläche kommen beispielsweise Materialien und Beschichtungen aus der Gruppe umfassend Polytetrafluorethylen (PTFE), Polyoxymethylen (POM), Polydimethylsiloxan und eine POM-Silikon-Beschichtung in Frage.

Die Erfindung betrifft auch eine Anordnung zur Fertigung eines Bauteils, aufweisend eine Vorrichtung zur additiven Fertigung des Bauteils gemäß den vorstehenden und nachfolgenden Ausführungen (insbesondere gemäß Anspruch 1 sowie den abhängigen Patentansprüchen) mit wenigstens einem seitlichen Führungsschenkel.

Die Vorrichtung oder Anordnung kann optional eine Materialaufbereitungseinrichtung aufweisen, die beispielsweise ein Fallsilo und eine Silomischpumpe umfasst. Die Silomischpumpe kann den Baustoff in konzentrierter oder trockener Form in dosierter Menge aus dem Fallsilo entnehmen und mit einer definierten Menge Flüssigkeit (insbesondere Wasser) vermischen. Optional kann ein Zwischenspeicher für diese Mixtur vorgesehen sein. Die Mixtur bzw. der fertige Baustoff kann schließlich zu und durch die Zuleitung gefördert werden.

Die Erfindung betrifft auch ein Verfahren zur additiven Fertigung eines Bauteils, wobei eine Materialausgabeeinheit zur Abscheidung eines Baustoffes mittels einer Aktuatorbaugruppe über eine Arbeitsfläche bewegt wird, um den Baustoff schichtenweise in vorgegebenen Druckbahnen abzuscheiden, sowie wenigstens ein erster Führungsschenkel, der dazu ausgebildet ist, eine erste Oberfläche einer oder mehrerer der von der Materialausgabeeinheit abgeschiedenen Baustoffschichten zu formen, aufweisend zumindest die folgenden Verfahrensschritte:
a) Zuführen des Baustoffs an die Materialausgabeeinheit;
b) Verlagern des wenigstens einen ersten Führungsschenkels mit Hilfe eines ersten Aktuators in wenigstens einem Translationsfreiheitsgrad relativ zu der Materialausgabeeinheit;
c) Verschwenken des wenigstens einen ersten Führungsschenkels mit Hilfe eines zweiten Aktuators in wenigstens einem Rotationsfreiheitsgrad relativ zu der Materialausgabeeinheit;
d) Abscheiden des Baustoffs entlang der vorgegebenen Druckbahn; und
e) Formen der wenigstens einen Oberfläche mit Hilfe des wenigstens einen ersten Führungsschenkels.

Das vorgeschlagene Verfahren eignet sich insbesondere auch zur Verwendung mit einem 3D-Betondrucker, insbesondere zur Verwendung mit einem 3D-Betondrucker in Portalbauweise ("Gantry-Bauweise").

Die Erfindung betrifft schließlich auch ein Computerprogramm, umfassend Steuerbefehle, die bei der Ausführung des Programms durch eine Steuereinrichtung diese veranlassen, ein Verfahren gemäß den vorstehenden und nachfolgenden Ausführungen auszuführen.

Die Steuereinrichtung kann als Mikroprozessor ausgebildet sein. Anstelle eines Mikroprozessors kann auch eine beliebige weitere Einrichtung zur Implementierung der Steuereinrichtung vorgesehen sein, beispielsweise eine oder mehrere Anordnungen diskreter elektrischer Bauteile auf einer Leiterplatte, eine speicherprogrammierbare Steuerung (SPS), eine anwendungsspezifische integrierte Schaltung (ASIC) oder eine sonstige programmierbare Schaltung, beispielsweise auch ein Field Programmable Gate Array (FPGA), eine programmierbare logische Anordnung (PLA) und/oder ein handelsüblicher Computer.

Merkmale, die im Zusammenhang mit einem der Gegenstände der Erfindung, namentlich gegeben durch die erfindungsgemäße Vorrichtung, die erfindungsgemäße Anordnung, das erfindungsgemäße Verfahren oder das erfindungsgemäße Computerprogramm beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1 % oder weniger, und ganz besonders bevorzugt ±0,1 % oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: einen vereinfachten Aufbau eines 3D-Druckers in Portalbauweise;
- Figur 2: eine erfindungsgemäße Vorrichtung gemäß einer ersten Ausführungsform in isometrischer Darstellung;
- Figur 3a, 3b, 3c: die erfindungsgemäße Vorrichtung der Figur 2 in einem Freischnitt;
- Figur 4: die Schnittansicht G-G gemäß der Schnittlinie G-G in Figur 3a;
- Figur 5a, 5b: die Schnittansicht A-A und B-B gemäß den Schnittebenen A-A und B-B in Figur 2;
- Figur 6: die erfindungsgemäße Vorrichtung der Figur 2 gemäß einer zweiten Ausführungsform in einem Freischnitt;
- Figur 7: eine Schnittansicht der erfindungsgemäßen Vorrichtung gemäß einer zweiten Ausführungsform, die der Schnittansicht A-A gemäß Figur 2 entspricht;
- Figur 8: eine Schnittansicht C-C der Vorrichtung gemäß der Schnittebene C-C in Figur 2;
- Figur 9: die Detailansicht D gemäß Figur 8; und
- Figur 10: eine isometrische Detailansicht der Vorrichtung gemäß den Figuren 8 und 9.

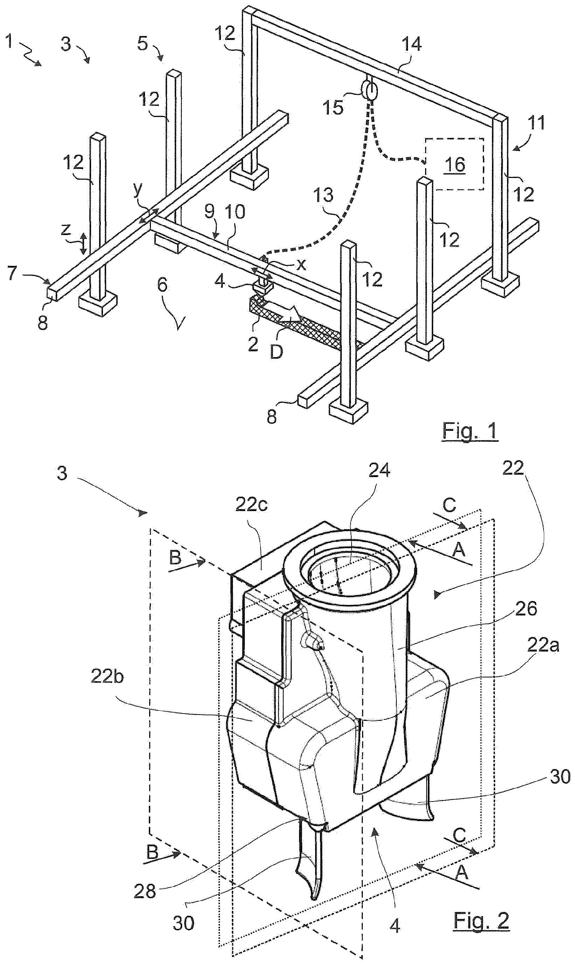

Figur 1 zeigt eine stark vereinfachte Anordnung 1 zur additiven Fertigung eines Bauteils 2. Die Anordnung 1 weist eine Vorrichtung 3 zur additiven Fertigung des Bauteils 2 auf, mit einer nur schematisch angedeuteten Materialausgabeeinheit 4 zur Abscheidung eines Baustoffs und einer Aktuatorbaugruppe 5, die ausgebildet ist, die Materialausgabeeinheit 4 über eine Arbeitsfläche 6 zu bewegen, um den Baustoff schichtenweise in vorgegebenen Druckbahnen D abzuscheiden.

Die Erfindung ist nachfolgend insbesondere im Rahmen eines 3D-Betondrucks beschrieben, also zur additiven Fertigung eines Bauteils 2 eines Bauwerks oder eines vollständigen Bauwerks aus fließfähig angemischtem Beton. Dies ist allerdings grundsätzlich nicht einschränkend zu verstehen. Die Erfindung eignet sich im Grunde zur Herstellung beliebiger additiver Bauteile aus einem beliebigen Baustoff, insbesondere auch für die Fertigung von Kunststoffbauteilen.

Um die Materialausgabeeinheit 4 zu bewegen, weist die Aktuatorbaugruppe 5 zumindest eine erste Horizontalführung 7 auf, bei der es sich in Figur 1 und den nachfolgenden Ausführungsbeispielen jeweils um zwei Horizontalträger 8 handelt, die parallel und voneinander beabstandet angeordnet sind. Zwischen diesen beiden Horizontalträgern 8 ist eine zweite Horizontalführung 9 vorgesehen, die somit entlang der ersten Horizontalführung 7 linear bewegbar ist. Die zweite Horizontalführung 9 ist als einzelner Querträger 10 ausgebildet, entlang dem die Materialausgabeeinheit 4 in der Art einer Laufkatze bewegbar ist, also quer zu der ersten Horizontalführung 7. Durch die beiden Horizontalführungen 7, 9 kann schließlich eine zweidimensionale Bewegung der Materialausgabeeinheit 4 über der Arbeitsfläche 6 ermöglicht werden (vgl. Pfeile "x" und "y").

Ergänzend weist die Aktuatorbaugruppe 5 gemäß Figur 1 eine Vertikalführung 11 auf, entlang der die Materialausgabeeinheit 4 vertikal zu der Arbeitsfläche 6 bewegbar ist. Konkret kann vorgesehen sein, dass die Vertikalführung 11 zwei Gruppen von Vertikalstreben 12 aufweist, wobei die Vertikalstreben 12 jeder Gruppe voneinander beabstandet und in einer Flucht zueinander angeordnet sind, und wobei beide Gruppen voneinander beabstandet sind. Somit kann die erste Horizontalführung 7 bzw. können die Horizontalträger 8 der ersten Horizontalführung 7 entlang den Vertikalstreben 12 der jeweiligen Gruppe bewegt werden (vgl. Pfeil "z").

Eine Traverse 14, die beispielsweise an zwei Vertikalstreben 12 der Vertikalführung montiert ist, trägt weiterhin eine Umlenkrolle 15, über die ein Förderschlauch 13 für Trockenmörtel ausgehend von einer Materialaufbereitungseinheit 16 (als Black Box angedeutet) bis zur Materialausgabeeinheit 4 geführt wird.

In Figur 1 und den Ausführungsbeispielen ist somit ein 3D-Betondrucker in Portalbauweise mit jeweils linearer Achsenführung dargestellt. Dies ermöglicht eine Bewegung der Materialausgabeeinheit 4 entlang aller Translationsfreiheitsgrade x, y, z. Portaldrucker, insbesondere solche zur Fertigung von Bauteilen 2 aus Beton, sind grundsätzlich bereits bekannt, weshalb auf zusätzliche Details vorliegend nicht weiter eingegangen wird.

Ziel der vorliegenden Erfindung ist die Verbesserung der Formgebung insbesondere Oberflächenbearbeitung der seitlichen Oberflächen eines gedruckten Bauteils mit Hilfe von seitlichen Führungsschenkeln. Weiterhin wird ein verbessertes Handling derartiger Führungsschenkel bereitgestellt.

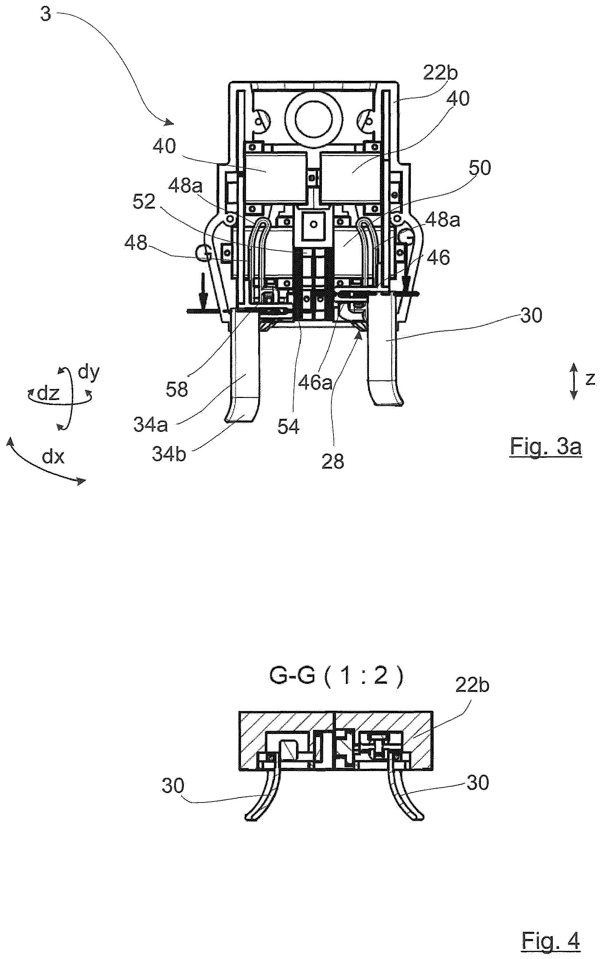

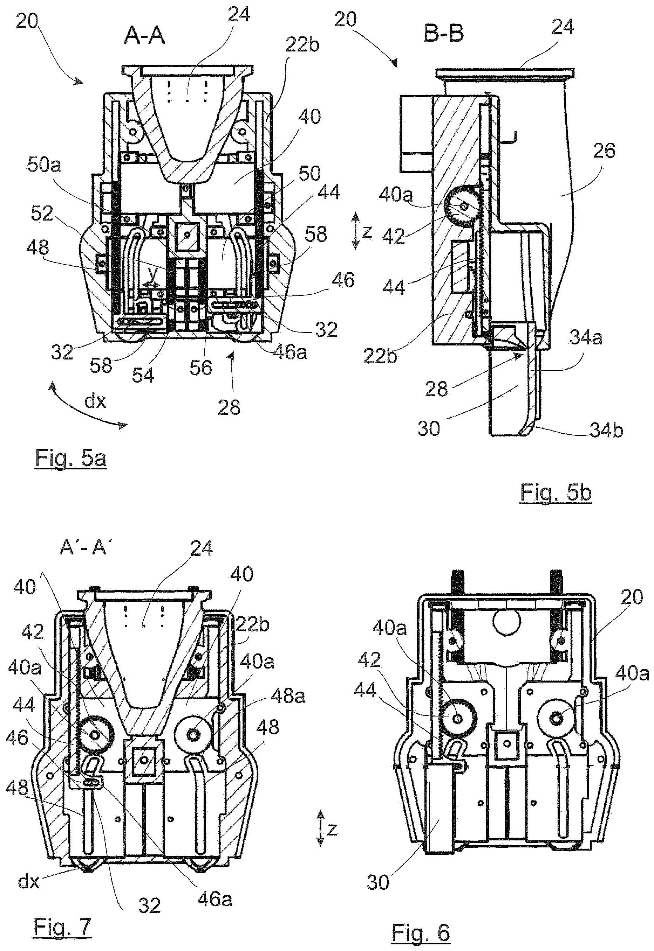

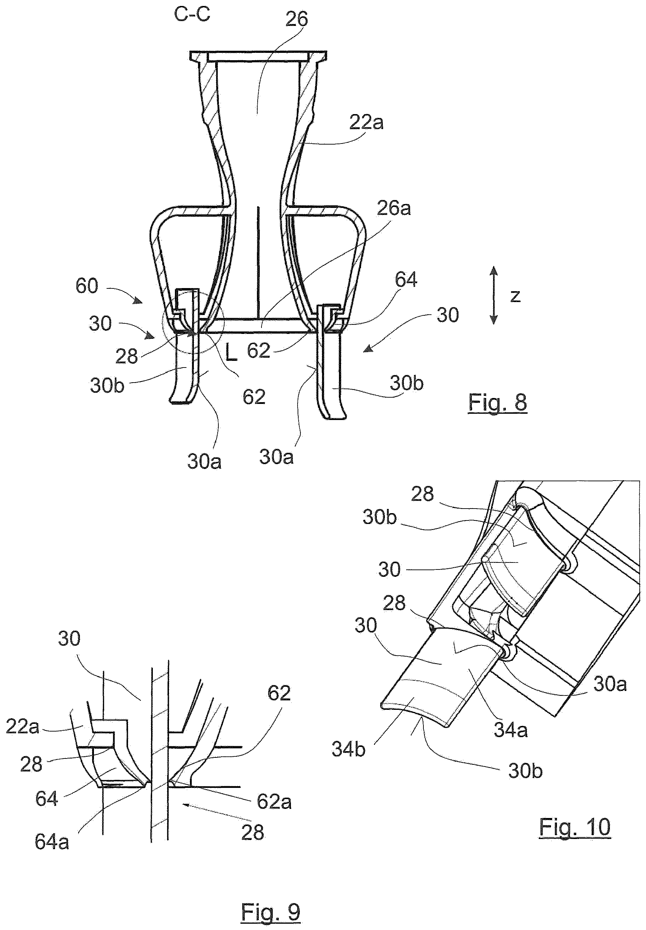

Die Figur 2 zeigt eine erfindungsgemäße Vorrichtung 3 zur additiven Fertigung eines Bauteils 2 mit verbesserter Formgebung in isometrischer Ansicht. Die Figuren 3a bis 3c, Figur 4 und Figuren 5a und 5b zeigen ein konkretes Ausführungsbeispiel der Erfindung mit weiteren Details in einem vergrößerten Ausschnitt der Vorrichtung 3, die Figuren 6 und 7 zeigen ein zweites Ausführungsbeispiel, wobei die Ansichten im Wesentlichen den Darstellungen der ersten Ausführungsform gemäß den Figuren 3a und 5a entsprechen. Die Figuren 8 bis 10 zeigen schließlich ein weiteres Detail der Erfindung, die Reinigungsanordnung in mehreren Ansichten.

In der Figur 2 ist eine isometrische Darstellung einer erfindungsgemäßen Vorrichtung, insbesondere ein Gehäuse 20 mit mehreren Gehäuseteilen oder Gehäusebereichen gezeigt. Man erkennt, dass das Gehäuse 20 wenigstens drei Gehäuseteile bzw. Gehäusebereiche aufweist, nämlich einen vorderen Gehäusedeckel 22a, einen mittleren Gehäusebereich 22b und einen hinteren Gehäusedeckel 22c.

Der vorderen Gehäusedeckel 22a und der mittlere Gehäusebereich 22b bilden zusammen einen Materialzuführungsbereich 24 aus, über den ein Baustoff in bekannter Weise von dem Führungsschlauch 13 über einen Extruder (nicht gezeigt) zugeführt werden kann. Im Inneren des Gehäuses 20 ist ein Baustoffkanal 26 ausgebildet, der in eine Ausbringöffnung mündet, um den Baustoff auszubringen. Der gebildete Kanal ist in der Darstellung der Figur 2 durch die Außenkontur des Gehäusedeckels 22a angedeutet (vgl. Bezugszeichen 26).

Erfindungswesentlich sind die ebenfalls in der Figur 2 zu erkennenden Führungsschenkel 30, wobei in der gezeigten Ausführungsform die Vorrichtung 3 einen ersten Führungsschenkel 30 und einen zweiten Führungsschenkel 30 aufweist, die im Wesentlichen baugleich ausgebildet sind, weshalb nachfolgend primär auf den ersten Führungsschenkel 30 Bezug genommen wird.

Die Führungsschenkel 30 dienen bei der vorliegenden Erfindung dazu, die seitlichen Oberflächen einer aufgebrachten Bauschicht (nachträglich) zu glätten, um beispielsweise das Auftreten von Riefen oder Kanten im noch nicht vollständig ausgehärteten Baustoff eines zu bildenden Bauteils 2 zu reduzieren. Die von der Materialausgabeeinheit 4 abgegebenen Baustoffschichten werden bahnförmig in Druckbahnen D aufeinander aufgebracht, wobei sich beispielsweise zwischen den einzelnen Schichten Unebenheiten ausbilden können. Andere Effekte, die zu unerwünschten Unebenheiten auf den seitlichen Oberflächen eines Bauteils führen können, wurden eingangs diskutiert und können durch die gezeigten Führungsschenkel 30 ebenfalls vermindert werden.

Eine Besonderheit der Erfindung liegt dabei darin, dass die Führungsschenkel 30 durch wenigstens eine, in der gezeigten Ausführungsform durch zwei Aufnahmeöffnungen 28, zumindest abschnittsweise in das Gehäuse 20 der Vorrichtung 3 ragen (vgl. hierzu insbesondere auch die weiteren Figuren 3a bis 10) Wie in den Figuren ebenfalls erkennbar ist, können die Aufnahmeöffnungen in mehreren aneinander angrenzenden Gehäuseteilen ausgebildet sein, beispielsweise in dem vorderen Gehäusedeckel 22a und dem mittleren Gehäusebereich 22b, derart, dass die Führungsschenkel 30 in einen Teil des Gehäuses 20 hineinragen können, der den Baustoffkanal 26 ausbildet.

In der Figur 2 sind schließlich drei Schnittebenen A-A, B-B und C-C gezeigt, wobei die hierdurch gebildeten Schnitte die Merkmale der Erfindung näher zu illustrieren vermögen.

Die Figuren 3a bis 3c zeigen die erfindungsgemäße Vorrichtung 3 gemäß der Figur 2 in einer Vorderansicht, wobei der vordere Gehäusedeckel 22a weggelassen wurde. Die Figur 4 ist eine Schnittansicht des Schnitts entlang der geknickten Schnittlinie G-G der Figur 3a.

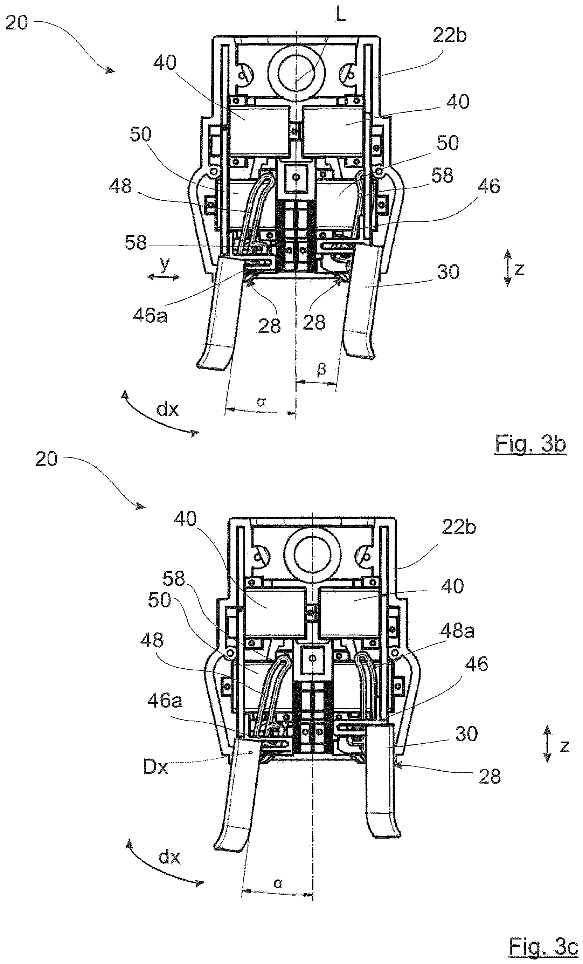

Man erkennt in den Figuren 3b und 3c, dass die Führungsschenkel 30 sowohl in einer vertikalen Richtung, d.h. in den Figuren nach oben bzw. nach unten (angedeutet durch den Pfeil z) translatorisch verlagert werden können, als auch in einem Anstellwinkel α und β relativ zu einer Längsachse L des Gehäuses 20 angestellt werden können. Hierzu können die Führungsschenkel 30 um eine Rotationsachse in einem Rotationsfreiheitsgrad dx verschwenkt werden.

Die Längsachse L (vgl. Figuren 3b, 3c) des Gehäuses 20 fällt in der gezeigten Ausführungsform zusammen mit einem Lot zu der Arbeitsfläche 6 und damit der vertikalen Richtung, wobei selbstverständlich bei einer Kippbewegung der Vorrichtung 3 relativ zu einem Lot auf die Arbeitsfläche 6 diese auseinanderfallen können. Vorliegend wird für eine vereinfachte Beschreibung der Erfindung unterstellt, dass die Vorrichtung 3 genau senkrecht ausgerichtet ist, derart dass die Längsachse L des Gehäuses 20 mit einem Lot auf die Arbeitsfläche 6 zusammenfällt.

Das Bauteil 2 hat in der nachfolgend diskutierten vereinfachten Darstellung der Erfindung ebenfalls eine im Wesentlichen vertikale Erstreckung ohne Überhänge in horizontaler Richtung, wodurch zwei seitliche, die Wanddicke begrenzende Oberflächen gebildet werden, die im Wesentlichen senkrecht zur Arbeitsfläche 6 stehen und von den Führungsschenkeln 30 geglättet werden können. Für eine solche vergleichsweise einfache Geometrie und Glättaufgabe reicht grundsätzlich auch eine vertikale Verlagerbarkeit der Führungsschenkel 30, wie sie beispielsweise in dem Ausführungsbeispiel der Figuren 6 und 7 gezeigt ist.

Die Figuren 6 und 7 zeigen ebenfalls eine Darstellung ohne vorderen Gehäusedeckel 22a (Figur 6) sowie eine geschnittene Darstellung gemäß der Schnittebene A-A der Figur 2 (Figur 7), wobei die Figuren 6 und 7 eine zweite Ausführungsform betreffen, weshalb der Schnitt in Figur 7 als A'-A' bezeichnet ist.

Anhand der Figur 7 ist ferner insbesondere der Aufbau der Vorrichtung gut nachvollziehbar, während die Figur 6 den Führungsschenkel 30 in einer nahezu vollständig in das Gehäuse 20 zurückgezogenen Ruhestellung zeigt.

In der Figur 7 auf der linken Seite erkennt man, dass der erste Führungsschenkel (die Führungsschenkel sind in der Darstellung zur Vereinfachung in der Darstellung weggelassen worden), mit Hilfe eines Aktuators 40 (auch angedeutet durch die angetriebene Abtriebswelle 40a) in vertikaler Richtung z auf und ab bewegt werden können.

Der Aktuator 40 kann vorliegend einen Servomotor umfassen, welcher in dem hinteren Gehäusedeckel 22c aufgenommen und dazu eingerichtet ist, ein Zahnrad 42 (auf der rechten Seite wurde dieses weggelassen) anzutreiben, das seinerseits mit einer Zahnstange 44 (auf der rechten Seite wurde diese weggelassen) in kämmendem Eingriff ist, wodurch ein Mitnehmer 46 (auf der rechten Seite wurde dieser weggelassen) mit dem nicht dargestellten Führungsschenkel auf und ab bewegt werden kann.

In den Figuren 6 und 7 sind die beiden Aktuatoren zur Bewegung der Führungsschenkel beide mit dem Bezugszeichen 40 bezeichnet. Dabei kann es sich theoretisch um einen Aktuator handeln, der geeignet ist, beispielweise über eine Kupplungsanordnung beide Führungsschenkel zu bewegen. Allerdings kann es sich insbesondere auch um zwei unabhängig voneinander betreibbare Aktuatoren 40 handeln, die jeweils einem der Führungsschenkel 30 zugeordnet sind und die beiden Führungsschenkel individuell und unabhängig voneinander zu verstellen.

Weiterhin erkennt man insbesondere auf der rechten Seite der Figur 7 eine Führungskontur 48, die unmittelbar an dem Gehäuse 20 ausgebildet sein kann oder an einem separaten Bauteil, das an dem Gehäuse 20, insbesondere dem mittleren Gehäusebereich 22b angeordnet sein kann.

In der vereinfachten Ausführungsform der Figuren 6 und 7, in der die Führungsschenkel 30 nur in einer im wesentlichen vertikalen Richtung z auf und ab bewegt werden, kann die Führungskontur 48 fest mit dem Gehäuse 20 verbunden sein.

Diese Führungskontur 48 dient dazu, insbesondere mit dem an einem Endbereich 48a ausgebildeten gebogenen Bereich eine geringfügige Schwenkbewegung des freien Endes des zugeordneten Führungsschenkels 30 in diesen einzuleiten, wenn der Führungsschenkel 30 nahezu vollständig in das Gehäuse 20 eingezogen ist (vgl. Figur 6).

Man erkennt, dass der Führungsschenkel 30 mit einem Stift bzw. Pin (angedeutet in der Figur 7 mit dem Bezugszeichen 32) mit dem Mitnehmer 46 verbunden ist, wobei der Stift 32 innerhalb einer horizontal verlaufenden Nut 46a eine geringfügige horizontale Relativbewegung zu dem Mitnehmer 46 vollziehen kann. Hierdurch kann die geringfügige Schwenkbewegung des freien Endes des zugeordneten Führungsschenkels 30 erfolgen, wenn dieser nahezu vollständig in das Gehäuse 20 eingezogen wird.

Diese geringfügige Schwenkbewegung ermöglicht auch die spezifische Ausgestaltung der Führungsschenkel 30, die eine in einem Längsschnitt (entlang ihrer Mittellängsachse) betrachtet langgestreckte Kontur mit einem flachen Führungsabschnitt 34a und einem gebogenen Endabschnitt 34b aufweisen (vgl. hierzu auch Figur 5b). Durch die Führungskontur 48 und die horizontale Relativbewegung des Führungsschenkelstiftes 32 relativ zu dem Mitnehmer 46 kann auch dieser gebogene Endabschnitt 34b in das Gehäuse 20 eingezogen bzw. eingeschwenkt werden.

Der gebogene (in eine Mittellängsschnitt betrachtet von der zu formenden Oberfläche weg gekrümmte) Endbereich 34b bildet bezogen auf eine vertikale Bewegung der Führungsschenkel relativ zu dem Bauteil 2, insbesondere relativ zu der zu formenden Oberfläche, eine Einlauf- bzw. Auslaufzone, was für das Glätten der Übergänge besonders vorteilhaft ist. Weiterhin kann hierdurch das aus der Praxis mit flachen Glättspachteln bekannte Einschnüren der unteren Baustoffschichten, wie eingangs beschrieben, verringert oder ganz vermieden werden, wodurch wiederum der bekannte und unerwünschte Effekt von Kantenbildung verringert oder vermieden werden kann.

Eine weitere Besonderheit der Ausgestaltung der Führungsschenkel 30 lässt sich auch in den Figuren 4 und 9 gut erkennen. Diese sind in einem Querschnitt betrachtet nicht gerade (und damit zumindest am Führungsabschnitt 34a flach) ausgebildet, wie dies aus dem Stand der Technik bekannt ist, sondern weisen eine Krümmung auf. Diese kann, wie in der gezeigten Ausführungsform durchgehend sein, es ist jedoch auch möglich nur an den (im Querschnitt betrachtet) endseitigen Abschnitten eine Krümmung bereitzustellen, während ein mittlerer Bereich (im Querschnitt betrachtet) flach ausgebildet sein kann. Durch diese spezifische Ausgestaltung kann ein Einlaufzone und Auslaufzone bezogen auf die Bewegungsrichtung x beim Drucken der Druckbahnen B geschaffen werden, was für den Formprozess, insbesondere für ein Glätten, besonders günstig ist.

Im Unterschied zu der vergleichsweise einfacheren Ausführungsform der Figuren 6 und 7, die eine im Wesentlichen nur vertikale Relativverlagerung der Führungsschenkel 30 relativ zu der Materialausgabeeinheit 4 aus einer Arbeitsstellung, in der die Führungsschenkel 30 die seitlichen Oberflächen (erste Oberfläche und zweite Oberfläche) eines Bauteils 2 zu formen, insbesondere zu glätten, vermögen, in eine Ruhestellung vorsieht, in der die Führungsschenkel 30 nahezu vollständig in das Gehäuse 20 eingezogen sind, kann bei den Ausführungsformen der Figuren 3a bis 3c, 4 und 5a bis 5b zusätzlich ein Verschwenken der Führungsschenkel 30 relativ zu der Materialausgabeeinheit 4 in wenigstens einem Rotationsfreiheitsgrad dx erfolgen.

Alternativ oder zusätzlich zu der gezeigten Lösung kann selbstverständlich vorgesehen sein, dass eine Verschwenkung in einem weiteren Rotationsfreiheitsgrad erfolgt, angedeutet durch die Rotationsfreiheitsgrade (in der Figur 3a) dy und dz.

Insbesondere die Figuren 3b und 3c zeigen, wie wenigstens einer der Führungsschenkel 30 in einem Anstellwinkel α bzw. β relativ zu der Materialausgabeeinheit 4 (hier symbolisch durch die Achse L dargestellt) verschwenkt werden kann. Dabei ist sowohl eine Verschwenkung des Endabschnitts 34b des Führungsschenkels 30 von der Materialausgabeeinheit 4 weg (Winkel α) als auch zu der Materialausgabeeinheit 4 hin (Winkel β) möglich. Auf diese Weise können beispielweise Überhänge und geneigte Wände eines Bauteils 2 aber auch zulaufende Endabschnitte eines Bauteils 2 geglättet werden.

Man erkennt in den Figuren 3b und 3c ebenfalls, dass die Führungsschenkel 30 individuell einstellbar sind, sowohl bezüglich ihrer vertikalen Relativposition (wie auch die Ausführungsform der Figuren 6 und 7) als auch bezüglich ihrer rotatorischen Relativposition zu der Materialausgabeeinheit 4.

Hierzu ist in vergleichbarer Weise wie in der ersten Ausführungsform ein erster bzw. dritter Aktuator 40 vorgesehen, der dazu dient die Führungsschenkel 30 in vertikaler Richtung z zu verlagern. Der Aktuator 40 kann vorliegend einen Servomotor umfassen, welcher in dem hinteren Gehäusedeckel 22c oder wie gezeigt in dem mittleren Gehäusebereich 22b aufgenommen und dazu eingerichtet ist, ein Zahnrad 42 anzutreiben, das seinerseits mit einer Zahnstange 44 in kämmendem Eingriff steht, wodurch ein Mitnehmer 46 mit dem verbundenen Führungsschenkel 30 (in Figur 5a wurden diese zur Vereinfachung weggelassen) auf und ab bewegt werden kann.

In den Figuren 5a, 5b sind die beiden Aktuatoren zur vertikalen Bewegung der Führungsschenkel beide mit dem Bezugszeichen 40 bezeichnet. Dabei kann es sich theoretisch um einen Aktuator handeln, der geeignet ist, beispielweise über eine Kupplungsanordnung beide Führungsschenkel zu bewegen. Allerdings kann es sich insbesondere auch um zwei unabhängig voneinander betreibbare Aktuatoren 40 handeln, die jeweils einem der Führungsschenkel 30 zugeordnet sind und die beiden Führungsschenkel individuell und unabhängig voneinander zu verstellen.

Weiterhin ist ein zweiter Mechanismus zum Verschwenken der Führungsschenkel 30 vorgesehen. Auch dieser umfasst einen Aktuator 50, d.h. einen zweiten Aktuator 50 und einen vierten Aktuator 50, die analog zu dem ersten und dritten Aktuator einen gemeinsamen Aktuator oder, wie gezeigt, zwei unabhängig voneinander betreibbare Aktuatoren 50 umfassen können. Dabei ist jeder der Aktuatoren 50 dazu ausgebildet, mit seiner Abtriebswelle 50a ein Zahnrad (Stirnrad) 52 drehend anzutreiben. In kämmendem Eingriff mit dem Zahnrad 52 steht ein weiteres Zahnrad 54, das drehfest mit einer Spindel 56 verbunden ist. Auf der Spindel 56 sitzt in der gezeigten Ausführungsform ein weiterer Mitnehmer 58, der in eine horizontale Bewegung in y-Richtung versetzt wird, wenn die Spindel 56 angetrieben wird (vgl. hierzu Figur 5a).

Der zweite Mitnehmer 58 ist in der gezeigten Ausführungsform einteilig mit einer Führungskontur 48 ausgebildet. Innerhalb der Führungskontur 48 ist ein Stift oder Pin (angedeutet in der Figur 5a mit dem Bezugszeichen 32) mit dem zweiten Mitnehmer 58 verbunden ist, wobei der Stift 32 innerhalb einer im Wesentlichen vertikal verlaufenden Führungsnut der Führungskontur 48 eine im wesentlichen vertikale Relativbewegung zu dem zweiten Mitnehmer 58 vollziehen kann.

Wie bei der vereinfachten Ausführungsform der Figuren 6 und 7, in der die Führungsschenkel 30 nur in einer im wesentlichen vertikalen Richtung auf und ab bewegt werden, dient die Führungskontur 48 auch dazu, insbesondere mit dem an einem Endbereich 48a ausgebildeten gebogenen Bereich eine geringfügige Schwenkbewegung des freien Endes des zugeordneten Führungsschenkels 30 in diesen einzuleiten, wenn der Führungsschenkel 30 nahezu vollständig in das Gehäuse 20 eingezogen ist.

Man erkennt, dass der Führungsschenkel 30, wie bei der Ausführungsform der Figuren 6 und 7, mit seinem Stift bzw. Pin (angedeutet in der Figur 5a mit dem Bezugszeichen 32) zusätzlich mit dem Mitnehmer 46 (und auch mit dem Mitnehmer 48) verbunden ist, wobei der Stift 32 innerhalb einer horizontal verlaufenden Nut 46a eine horizontale Relativbewegung in Richtung y zu dem Mitnehmer 46 vollziehen kann. Hierdurch kann zum Einen die geringfügige Schwenkbewegung des freien Endes des zugeordneten Führungsschenkels 30 (mit dem gebogenen Endabschnitt 34b), wie vorstehend beschrieben erfolgen, wenn dieser nahezu vollständig in das Gehäuse 20 eingezogen bzw. eingeschwenkt wird Zum anderen kann hierdurch weiterhin auch die Verschwenkbewegung zur Umsetzung der in den Figuren 3b und 3c gezeigten Anstellwinkel, erreicht werden.

Die geringfügige Schwenkbewegung ermöglicht auch bei dieser Ausführungsform, dass die Führungsschenkel 30, die eine in einem Längsschnitt betrachtet langgestreckte Kontur mit einem flachen Führungsabschnitt 34a und einem gebogenen Endabschnitt 34b aufweisen (vgl. hierzu auch Figur 5b), mit dem gebogenen Endabschnitt 34b in das Gehäuse 20 eingezogen bzw. eingeschwenkt werden können.

Weiterhin ist der zweite Mitnehmer 58 in einem Lagerpunkt um eine Drehachse Dx (angedeutet in der Figur 3b) schwenkbar relativ zu dem Gehäuse 20 an diesem gelagert. Die Drehachse Dx erstreckt sich hierbei im Wesentlichen parallel zu der Druckbahn D bzw. bewegt sich mit dieser mit, wodurch auch Bauteile mit gebogenen Druckbahnen seitlich geglättet werden können.

Infolge einer Schwenkbewegung des zweiten Mitnehmers 58 wird auch die Führungskontur 48 mit verschwenkt, derart, dass die Führungsnut der Führungskontur 48 sich nicht mehr im wesentlich vertikal in Richtung z erstreckt sondern in einem hierzu angestellten Winkel (gemäß dem Anstellwinkel, vgl. hierzu Figuren 3b und 3c). Demgemäß wird bei einer von dem Aktuator 40 eingeleiteten Vertikalbewegung des zugeordneten Führungsschenkels 30 der verbindende Stift oder Pin 32 des Führungsschenkels 30 eine Translationsbewegung entlang der Führungskontur 48 in dem gewählten Anstellwinkel vollziehen.

Weiterhin bilden die Anlageflächen der Aufnahmeöffnungen 28 ein Auflager für den jeweiligen Führungsschenkel 30, so dass dieser in Anlage an diese durch die Verschwenkbewegung des zweiten Mitnehmers 58 und die geführte Mitnahme seines Stiftes 32 in der Führungskontur 48 des zweiten Mitnehmers 58 entsprechend in einem Freiheitsgrad dx verschwenkt wird

Es wird somit durch die Aktuatoren 50 sowie die bereitgestellte Übertragungs- und Verbindungsstrukturen in Form der beschriebenen Komponenten eine zu einer vertikalen Verstellbewegung relativ zu der Materialausgabeeinheit 4 zusätzliche Verschwenkbewegung der Führungsschenkel 30 relativ zu der Materialausgabeeinheit 4 bereitgestellt.

Die Aktuatoren 40 und 50 lassen sich individuell betätigen und damit eine vollkommen individuelle Einstellung der Führungsschenkel 30 umsetzen. Weiterhin können die Aktuatoren gleichzeitig betrieben werden, wobei die Übertragungs- und Verbindungsstrukturen derart ausgebildet sind, dass diese sich bei einer gleichzeigten Betätigung der Aktuatoren nicht behindern, so dass eine simultane Bewegung sowohl in einem translatorischen Freiheitsgrad z als auch in einem rotatorischen Freiheitsgrad dx ermöglicht wird.

Auch bei dieser Ausführungsform können die Aktuatoren 40, 50 insbesondere als Servomotoren ausgebildet sein und insbesondere in dem hinteren Gehäusedeckel 22c oder dem mittleren Gehäusebereich 22b aufgenommen sein.

Eine weitere Besonderheit der Erfindung ist in den Figuren 8 bis 10 gezeigt.

Die mehrteilige Vorrichtung 3 (vgl. Figur 2) mit ihrem vorderen Gehäusedeckel 22a umfasst eine Reinigungsanordnung 60, die in der gezeigten Ausführungsform im Bereich der Gehäuseausnehmung (Aufnahmeöffnung) 28 angeordnet ist. Diese dient sowohl zum Schutz vor antrocknenden Baustoffresten an den Führungsschenkeln 30, insbesondere in einer Ruhestellung, als auch zum Schutz der Übertragungs- und Verbindungsstrukturen im Inneren des Gehäuses 20 vor Verschmutzung.

Diese umfasst einen Reinigungsabschnitt 62 in Form einer Kante, welche in Anlage an dem zugeordneten Führungsschenkel 30 (insbesondere an dessen Formseite) bei einer translatorischen Relativbewegung Baustoffrückstände von der anliegenden Oberfläche (der Formseite) des Führungsschenkel abzustreifen vermag.

Wie bereits im Zusammenhang mit den Figuren 3a bis 7 ausgeführt, können bei jeder der beiden Ausführungsformen der Erfindung die Führungsschenkel 30 vermittels der Aktuatoren 40 zumindest in eine vertikale Bewegung in Richtung z relativ zu dem Gehäuse 20 der Materialausgabeeinheit 4 bewegt werden. Die Reinigungsanordnung 60 mit dem Reinigungsabschnitt 62 ist an dem Gehäuse 20 angebracht, insbesondere in der gezeigten Ausführungsform der Figuren 8 bis 10 im Bereich der Aufnahmeöffnungen 28. So weist jede Aufnahmeöffnung 28 auf ihrer der Ausbringöffnung 26a der Materialausgabeeinheit 4 zugewandten Seite eine Kante 62a auf, die an dem zugeordneten Führungsschenkel 30 auf einer Formseite 30a des Führungsschenkels anliegt.

Dabei bezeichnet der Begriff "Formseite" diejenige Seite des Führungsschenkels 30, die ebenfalls der Ausbringöffnung 26a der Materialausgabeeinheit 4 zugewandt ist. Mit der Formseite 30a des Führungsschenkels 30 wird der wesentliche glättende Effekt des Führungsschenkels erreicht, da diese in Anlage an die zu glättende Oberfläche gelangt.

Dementsprechend liegen sich die Formseiten 30a der Führungsschenkel 30 quasi gegenüber und begrenzen in der gezeigten Anordnung seitlich den Raum, in den durch die Ausbringöffnung 26a der Baustoff als Baustoffschicht ausgebracht wird.

In der in Figur 8 gezeigten Anordnung können sich die Führungsschenkel 30 in einer Arbeitsposition befinden, in der ihre Formseiten 30a an einer Baustoffschicht (nicht dargestellt) formend anliegen können. Werden die Führungsschenkel 30 nun in der vertikalen Richtung z nach oben in das Innere des Gehäuses 20 (in Figur 8 ist nur der vordere Gehäusedeckel 22a gezeigt) eingezogen, streift jeder der Führungsschenkel 30 an der zugehörigen Kante 62a des Reinigungsabschnitts 62 möglicherweise noch an der Formfläche 30a anhaftende Baustoffrückstände ab. Die Formseite 30a der Führungsschenkel 30 wird auf diese Weise gereinigt.

Weiterhin erkennt man ein elastisches Reinigungselement 64, das auf der gegenüberliegenden Seite der Aufnahmeöffnung 28 angeordnet ist und beispielsweise eine Gummilippe aufweist. Das elastische Reinigungselement 64 spannt den anliegenden Führungsschenkel 30 zumindest geringfügig vor und hält diesen in Anlage an dem Reinigungsabschnitt 62. Auf diese Weise wird sichergestellt, dass die Formfläche 30a des Führungsschenkels über die gesamte Breite (d.h. in horizontaler Richtung) in Anlage an dem Reinigungsabschnitt 62 verbleibt und Baustoffrückstände zuverlässig abgestreift werden können.

Zudem ist das elastische Reinigungselement 64 auch geeignet, etwaige Baustoffrückstände an der anliegenden Oberfläche (auf der von der Formseite 30a des Führungsschenkels gegenüberliegenden Seite 30b) des zugeordneten Führungsschenkels 30 abzustreifen, falls nötig. Hierzu weist das elastisches Reinigungselement 64 ebenfalls eine Kante 64a auf. Diese wirkt in der gleichen Weise wie die Kante 62a des Reinigungsabschnitts 62 bei einer vertikalen Bewegung des Führungsschenkels 30 in Richtung z nach oben (d.h. in das Gehäuseinnere hinein) als Abstreifer für etwaige Baustoffrückstände auf der Seite 30b des Führungsschenkels 30.

Das in der gezeigten Ausführungsform als Gummilippe ausgebildete elastische Reinigungselement 64 der gezeigten Ausführungsform dichtet zudem die Aufnahmeöffnung 28 des Gehäuses 20 ab, was für den Schutz der darin aufgenommenen Komponenten besonders günstig ist.

Man erkennt in der Figur 10, dass sowohl der Reinigungsabschnitt 62 als auch das elastische Element 64 eine Anlagekontur aufweisen, die jeweils eine Negativkontur zu der Kontur des zugeordneten Führungsschenkels 30 im Anlagebereich an den Führungsschenkel 30 hat. Dies bedeutet in der gezeigten Ausführungsform, dass der Reinigungsabschnitt 62, d.h. die Kante 62a, wie auch das elastische Element 64 im Querschnitt betrachtet eine Krümmung aufweisen, die eine Anlage an die korrespondierende Krümmung der Formseite 30a bzw. die gegenüberliegende Seite 30b des Führungsschenkels 30 ermöglicht. Hierdurch wird eine besonders effiziente und vollflächige Reinigung des Führungsschenkels auf der Formseite 30a und der gegenliegenden Seite 30b ermöglicht.

In der Figur 10 erkennt man schließlich, dass die Reinigungsanordnung 60 eine im Querschnitt betrachtet geschlossenen Anlagekontur aufweisen kann, die eine Negativform des gesamten Querschnitts des Führungsschenkels 30 darstellt und die Reinigungsanordnung 60 den Führungsschenkel 30 somit komplett umschließt. Dabei können der Reinigungsabschnitt 62 und das elastische Element 64 ineinander übergehen oder es können weitere Reinigungsabschnitte vorgesehen sein, um dieser zu einer geschlossenen, den Führungsschenkel 30 umspannenden Anlagekontur zu verbinden. Etwaige weitere Reinigungsabschnitte können entsprechend auch eine Reinigungskante in der Art der Kante 62a aufweisen, welche nach innen zu dem Führungsschenkel hin ragt und ein Abstreifen von Baustoffresten ermöglicht.

Es ist auch möglich, dass nur ein elastisches Reinigungselement in der Art eines Gummirings in die Aufnahmeöffnung 28 eingesetzt ist und in vergleichbarer Weise den gesamten Führungsschenkel mit einer Anlagekontur umspannt, die eine Negativkontur zu der Kontur des Führungsschenkels (im Querschnitt betrachtet) aufweist. Bei einer solchen Lösung übernimmt das elastische Reinigungselement die Teilfunktion der Reinigung des Reinigungsabschnitts 62.

Schließlich kann das elastische Reinigungselement 64 in nicht dargestellter Art und Weise auch als Schmierelement dienen, in dem dieses ein Schmierfluid, beispielsweise Wasser, auf den zugeordneten Führungsschenkel 30 aufzubringen vermag. Hierzu kann das elastische Reinigungselement 64 auch als umlaufendes Element, beispielsweise als Gummiring in die Aufnahmeausnehmung 28 des Gehäuses 20 eingesetzt sein.

Man erkennt in der Figur 10, dass sowohl der Reinigungsabschnitt 62 als auch das elastische Element 64 eine Anlagekontur aufweisen, die jeweils eine Negativkontur zu der Kontur des zugeordneten Führungsschenkels 30 im Anlagebereich an den Führungsschenkel hat. Hierdurch wird eine besonders effiziente und vollflächige Reinigung des Führungsschenkels auf der Formseite und der gegenliegenden Seite ermöglicht. Dies kann selbstverständlich auch für eine optionale Schmierung von Vorteil sein.

Nicht gezeigt ist ebenfalls, dass die Ansteuerung der Aktuatoren 40, 50 über eine zusätzliche Steuereinheit und/oder über die Steuereinrichtung zur Ansteuerung der Aktuatorbaugruppe 5 erfolgen kann. Hierzu wird auf die Ausführungen in der Beschreibungseinleitung verwiesen.

## Patentansprüche

1. Vorrichtung (3) zur additiven Fertigung eines Bauteils (2), aufweisend eine Materialausgabeeinheit (4) zur Abscheidung eines Baustoffes und eine Aktuatorbaugruppe (5), die ausgebildet ist, die Materialausgabeeinheit (4) über eine Arbeitsfläche (6) zu bewegen, um den Baustoff schichtenweise in vorgegebenen Druckbahnen (D) abzuscheiden, sowie
wenigstens einen ersten Führungsschenkel (30), der dazu ausgebildet ist, eine erste Oberfläche der von der Materialausgabeeinheit (4) einen oder mehreren abgeschiedenen Baustoffschichten zu formen, wobei der wenigstens eine erste Führungsschenkel (30) von einem ersten Aktuator (40) angetrieben in wenigstens einem Translationsfreiheitsgrad (x, y, z) relativ zu der Materialausgabeeinheit (4) verlagerbar ist,
**dadurch gekennzeichnet, dass**
der wenigstens eine erste Führungsschenkel (30) von einem zweiten Aktuator (50) angetrieben in wenigstens einem Rotationsfreiheitsgrad (dx, dy, dz) relativ zu der Materialausgabeeinheit (4) verschwenkbar ist.

2. Vorrichtung (3) nach Anspruch 1,
**dadurch gekennzeichnet, dass**
der wenigstens erste und zweite Aktuator (40, 50) dazu eingerichtet sind, den wenigstens einen ersten Führungsschenkel (30) unabhängig voneinander anzutreiben, derart, dass der wenigstens einen ersten Führungsschenkel (30) simultan in wenigstens einem Translationsfreiheitsgrad (x, y, z) relativ zu der Materialausgabeeinheit (4) und in wenigstens einem Rotationsfreiheitsgrad (dx, dy, dz) relativ zu der Materialausgabeeinheit (4) bewegbar ist.

3. Vorrichtung (3) nach Anspruch 1 oder 2,
**dadurch gekennzeichnet, dass**
die Vorrichtung (3) wenigstens einen zweiten Führungsschenkel (30) zum Formen einer zweiten Oberfläche der von der Materialausgabeeinheit (4) einen oder mehreren abgeschiedenen Baustoffschichten aufweist, der von einem Aktuator (40) angetrieben wenigstens in einem Translationsfreiheitsgrad (x, y, z) relativ zu der Materialausgabeeinheit (4) verlagerbar ist und von einem weiteren Aktuator (50) angetrieben wenigstens in einem Rotationsfreiheitsgrad (dx, dy, dz) relativ zu der Materialausgabeeinheit (4) verschwenkbar ist, wobei der Aktuator (40) zur angetriebenen Verlagerung des wenigstens einen zweiten Führungsschenkels (30) wenigstens in einem Translationsfreiheitsgrad (x, y, z) relativ zu der Materialausgabeeinheit (4) den ersten Aktuator (40) zur angetriebenen Verlagerung des wenigstens einen ersten Führungsschenkels und/oder einen dritten Aktuator (40) aufweist, und wobei der weitere Aktuator (50) zur angetriebenen Verschwenkung des wenigstens einen zweiten Führungsschenkels (30) wenigstens in einem Rotationsfreiheitsgrad (dx, dy, dz) relativ zu der Materialausgabeeinheit (4) den zweiten Aktuator (50) zur angetriebenen Verschwenkung des wenigstens einen ersten Führungsschenkels (30) und/oder einen vierten Aktuator (50) aufweist,
wobei der wenigstens eine erste Führungsschenkel (30) und der wenigstens eine zweite Führungsschenkel (30) optional unabhängig voneinander, insbesondere von den jeweiligen ersten (40) und zweiten (50) bzw. dritten (40) und vierten Aktuatoren (50) angetrieben verlagert und/oder verschwenkt werden können; oder wobei der wenigstens eine erste Führungsschenkel und der wenigstens eine zweite Führungsschenkel optional gemeinsam von dem ersten Aktuator (40) angetrieben wenigstens in einem Translationsfreiheitsgrad (x, y, z) relativ zu der Materialausgabeeinheit (4) verlagerbar sind, und optional wenigstens einer des wenigstens einen ersten Führungsschenkels und des wenigstens einen zweiten Führungsschenkels mittels einer ersten Kupplungsanordnung mit dem ersten Aktuator verbunden ist.

4. Vorrichtung (3) nach Anspruch 3,
**dadurch gekennzeichnet, dass**
wobei der wenigstens eine erste Führungsschenkel und der wenigstens eine zweite Führungsschenkel gemeinsam von dem zweiten Aktuator angetrieben wenigstens in einem Rotationsfreiheitsgrad (dx, dy, dz) relativ zu der Materialausgabeeinheit (4) verschwenkbar sind, wobei wenigstens einer des wenigstens einen ersten Führungsschenkels und des wenigstens einen zweiten Führungsschenkels mittels einer zweiten Kupplungsanordnung mit dem zweiten Aktuator verbunden ist.

5. Vorrichtung (3) nach einem der vorherigen Ansprüche,
**dadurch gekennzeichnet, dass**
die von dem ersten Aktuator (40) angetriebene Verlagerung des wenigstens einen ersten Führungsschenkels (30) relativ zu der Materialausgabeeinheit (4) in wenigstens einem Translationsfreiheitsgrad (x, y, z), eine Bewegung des wenigstens einen ersten Führungsschenkels (30) in vertikaler Richtung (z) oder in horizontaler Richtung (x, y) aufweist.

6. Vorrichtung (3) nach einem der vorherigen Ansprüche,
**dadurch gekennzeichnet, dass**
die von dem zweiten Aktuator (50) angetriebene Verschwenkung des wenigstens einen ersten Führungsschenkels (30) relativ zu der Materialausgabeeinheit (4) in wenigstens einem Rotationsfreiheitsgrad (dx, dy, dz), eine Verschwenkbewegung des wenigstens einen ersten Führungsschenkels (30) um eine Rotationsachse (Dx) aufweist, die sich in horizontaler Richtung und insbesondere parallel zur Druckbahn erstreckt (dx, dy) oder die sich in vertikaler Richtung (dz) erstreckt.

7. Vorrichtung (3) nach einem der vorherigen Ansprüche,
**dadurch gekennzeichnet, dass**
der wenigstens eine erste Führungsschenkel (30) und/oder der wenigstens eine zweite Führungsschenkel (30) von einem weiteren Aktuator angetrieben zumindest in einem weiteren Translationsfreiheitsgrad relativ zu der Materialausgabeeinheit (4) verlagerbar und/oder in einem weiteren Rotationsfreiheitsgrad relativ zu der Materialausgabeeinheit (4) verschwenkbar ist bzw. sind.

8. Vorrichtung (3) nach einem der vorherigen Ansprüche,
**dadurch gekennzeichnet, dass**
die Vorrichtung (3) wenigstens eine Steuereinheit aufweist, die dazu eingerichtet ist, wenigstens einen der Aktuatoren zum Bewegen des wenigstens einen ersten Führungsschenkels und/oder des wenigstens einen zweiten Führungsschenkels anzusteuern, wobei die Vorrichtung (3) optional ferner wenigstens eine Steuereinrichtung aufweist, die dazu eingerichtet ist, die Aktuatorbaugruppe (5) zum Bewegen der Materialausgabeeinheit (4) über die Arbeitsfläche (6) anzusteuern, wobei die wenigstens eine Steuereinrichtung die wenigstens eine Steuereinheit zum Ansteuern der Aktuatoren zum Bewegen des wenigstens einen ersten Führungsschenkels und/oder des wenigstens einen zweiten Führungsschenkels aufweisen kann und/oder in kommunikativer Verbindung mit der wenigstens einen Steuereinheit stehen kann.

9. Vorrichtung (3) nach Anspruch 8,
**dadurch gekennzeichnet, dass**
die Steuereinrichtung, die zum Ansteuern der Aktuatorbaugruppe (5) zum Bewegen der Materialausgabeeinheit (4) über die Arbeitsfläche (6) eingerichtet ist, eine Schnittstelle aufweist, um hierüber 3D-Daten eines zu erstellenden Bauteils zu erhalten und eine Recheneinheit, um die erhaltenen 3D-Daten in Druckerdaten zu additiven Fertigung des Bauteils umzuwandeln, basierend auf denen sowohl die Aktuatorbaugruppe (5) zum Bewegen der Materialausgabeeinheit (4) von der Steuereinrichtung angesteuert werden kann als auch wenigstens einer der Aktuatoren zum Bewegen des wenigstens einen ersten Führungsschenkels und/oder des wenigstens einen zweiten Führungsschenkels von der Steuereinrichtung und/oder der damit in kommunikativer Verbindung stehenden Steuereinheit angesteuert werden kann.

10. Vorrichtung (3) nach einem der vorherigen Ansprüche,
**dadurch gekennzeichnet, dass**
die Materialausgabeeinheit ein Gehäuse (20) aufweist, wobei das Gehäuse (20) wenigstens eine Aufnahmeöffnung (28) aufweist,
wobei insbesondere der wenigstens eine erste Führungsschenkel (30) und/oder der wenigstens eine zweite Führungsschenkel (30) in einer Arbeitsstellung zumindest abschnittsweise durch die wenigstens eine Aufnahmeöffnung (28) aus dem Inneren des Gehäuses (20) zu ragen vermag bzw. vermögen, und/oder
wobei insbesondere der wenigstens eine erste Führungsschenkel (30) und/oder der wenigstens eine zweite Führungsschenkel (30) in einer Ruhestellung wenigstens abschnittsweise, vorzugsweise überwiegend, beispielsweise nahezu vollständig in dem Gehäuse (20) aufgenommen sein kann bzw. können.
wobei wenigstens einer der Aktuatoren (40, 50) zum Bewegen des wenigstens einen ersten Führungsschenkels (30) und/oder des wenigstens einen zweiten Führungsschenkels (30) optional zumindest abschnittsweise in dem Gehäuse (20) aufgenommen ist.

11. Vorrichtung (3) nach einem der vorhergehenden Ansprüche,
**dadurch gekennzeichnet, dass**
wenigstens einer der Aktuatoren (40, 50) zum Bewegen des wenigstens einen ersten Führungsschenkels (30) und/oder des wenigstens einen zweiten Führungsschenkels (30) wenigstens einen motorischen Antrieb, insbesondere einen Servomotor, einen Closed-Loop-Motor, einen Schrittmotor oder dergleichen aufweist, der geeignet ist, seine aktuelle Position an eine Steuereinheit oder Steuereinrichtung zurückzugeben.

12. Vorrichtung (3) nach einem der vorhergehenden Ansprüche,
**dadurch gekennzeichnet, dass**
die Vorrichtung eine Reinigungsanordnung (60) mit wenigstens einem dem wenigstens einen ersten Führungsschenkel (30) und/oder dem wenigstens einen zweiten Führungsschenkel (30) zugeordneten Reinigungsabschnitt (62) aufweist, wobei der Reinigungsabschnitt (62) in zumindest einer Relativstellung des wenigstens einen ersten Führungsschenkels und/oder des wenigstens einen zweiten Führungsschenkels relativ zu der Materialausgabeeinheit (4) zumindest abschnittsweise in reinigender Anlage an dem zugeordneten Führungsschenkel (30) angeordnet ist, derart, dass der wenigstens eine ersten Führungsschenkels und/oder der wenigstens eine zweite Führungsschenkels bei einer Verlagerung und/oder Rotation relativ zu der Materialausgabeeinheit (4) Baustoffrückstände an dem zumindest abschnittsweise in reinigender Anlage anliegenden Reinigungsabschnitt (62) abzustreifen vermag,
wobei der dem wenigstens einen ersten Führungsschenkel und/oder dem wenigstens einen zweiten Führungsschenkel zugeordnete Reinigungsabschnitt (62) optional an der Materialausgabeeinheit (4), beispielsweise an dem Gehäuse (20), insbesondere im Bereich der wenigstens einen Aufnahmeöffnung (28) des Gehäuses (22) angeordnet ist.

13. Vorrichtung (3) nach Anspruch 12,
**dadurch gekennzeichnet, dass**
die Reinigungsanordnung (60) ein elastisches Element (64) aufweist, das den wenigstens einen ersten Führungsschenkel und/oder den wenigstens einen zweiten Führungsschenkel gegen den zugeordneten Reinigungsabschnitt (62) vorzuspannen vermag, wobei das elastische Element (64) der Reinigungsanordnung (60) optional in zumindest einer Relativstellung des zugeordneten Führungsschenkels relativ zu der Materialausgabeeinheit (4) zumindest abschnittsweise in reinigender Anlage an dem zugeordneten Führungsschenkel angeordnet ist, derart, dass der zugeordnete Führungsschenkels bei einer Verlagerung und/oder Rotation relativ zu der Materialausgabeeinheit (4) Baustoffrückstände an dem zumindest abschnittsweise in reinigender Anlage anliegenden elastischen Element der Reinigungsanordnung (60) abzustreifen vermag.

14. Vorrichtung (3) nach einem der vorhergehenden Ansprüche,
**dadurch gekennzeichnet, dass**
die Vorrichtung (3) eine Schmieranordnung umfasst, die dazu ausgebildet ist, ein Schmierfluid an den wenigstens einen ersten Führungsschenkel und/oder an den wenigstens einen zweiten Führungsschenkel abzugeben, um diesen oder diese zumindest abschnittsweise mit dem Schmierfluid zu benetzen.

15. Vorrichtung (3) nach Anspruch 14 mit Anspruch 12,
**dadurch gekennzeichnet, dass**
das elastische Element der Reinigungsanordnung dazu eingerichtet ist, den zugeordneten Führungsschenkel mit einem von der Schmieranordnung abgegebenen Schmierfluid zu benetzen.

16. Vorrichtung (3) nach einem der vorhergehenden Ansprüche,
**dadurch gekennzeichnet, dass**
der wenigstens eine erste Führungsschenkel und/oder der wenigstens eine zweite Führungsschenkel eine Längserstreckung entlang einer ersten bzw. zweiten Mittellängsachse aufweist bzw. aufweisen, wobei der wenigstens eine erste Führungsschenkel und/oder der wenigstens eine zweite Führungsschenkel in einem senkrecht zu der ersten bzw. zweiten Mittellängsachse verlaufenden Querschnitt eine zumindest abschnittsweise gekrümmte Kontur aufweist bzw. aufweisen,
wobei optional der wenigstens eine erste Führungsschenkel und/oder der wenigstens eine zweite Führungsschenkel bezüglich der ersten bzw. zweiten Mittellängsachse im wesentlichen achssymmetrisch ausgebildet ist.

17. Vorrichtung (3) nach einem der vorhergehenden Ansprüche,
**dadurch gekennzeichnet, dass**
der wenigstens eine erste Führungsschenkel und/oder der wenigstens eine zweite Führungsschenkel eine Längserstreckung entlang einer ersten bzw. zweiten Mittellängsachse aufweist bzw. aufweisen, wobei der wenigstens eine erste Führungsschenkel und/oder der wenigstens eine zweite Führungsschenkel in einem entlang der ersten bzw. zweiten Mittellängsachse verlaufenden Längsschnitt eine zumindest abschnittsweise gekrümmte Kontur mit einem im wesentlichen geraden Führungsabschnitt (34a) aufweist bzw. aufweisen,
wobei optional der wenigstens eine erste Führungsschenkel und/oder der wenigstens eine zweite Führungsschenkel bezüglich der ersten bzw. zweiten Mittellängsachse im wesentlichen achssymmetrisch ausgebildet ist.

18. Verfahren zur additiven Fertigung eines Bauteils (2), wobei eine Materialausgabeeinheit (4) zur Abscheidung eines Baustoffes mittels einer Aktuatorbaugruppe (5) über eine Arbeitsfläche (6) bewegt wird, um den Baustoff schichtenweise in vorgegebenen Druckbahnen (D) abzuscheiden, aufweisend zumindest die folgenden Verfahrensschritte:
a) Zuführen des Baustoffs an die Materialausgabeeinheit (4);
b) Verlagern des wenigstens einen ersten Führungsschenkels (30 mit Hilfe eines ersten Aktuators (40) in wenigstens einem Translationsfreiheitsgrad (x, y, z) relativ zu der Materialausgabeeinheit (4);
c) Verschwenken des wenigstens einen ersten Führungsschenkels (30) mit Hilfe eines zweiten Aktuators (50) in wenigstens einem Rotationsfreiheitsgrad (dx, dy, dz) relativ zu der Materialausgabeeinheit (4);
d) Abscheiden des Baustoffs entlang der vorgegebenen Druckbahn (D) und
e) Formen der wenigstens einen Oberfläche mit Hilfe des wenigstens einen ersten Führungsschenkels (30).
